(19) Europäisches Patentamt
European Patent Office
Office européen des brevets

(11) EP 0 888 714 A1

(12) EUROPEAN PATENT APPLICATION
published in accordance with Art. 158(3) EPC

(43) Date of publication:
07.01.1999 Bulletin 1999/01

(21) Application number: 97907408.5

(22) Date of filing: 21.03.1997

(51) Int. Cl.[6]: **A01N 43/68**
// (A01N43/68, 37:02),
(A01N43/68, 37:10),
(A01N43/68, 43:40),
(A01N43/68, 47:30),
A01N43:68

(86) International application number:
PCT/JP97/00926

(87) International publication number:
WO 97/35481 (02.10.1997 Gazette 1997/42)

(84) Designated Contracting States:
DE FR GB

(30) Priority: 22.03.1996 JP 65788/96
17.05.1996 JP 123818/96
17.05.1996 JP 123821/96

(71) Applicant:
IDEMITSU KOSAN COMPANY LIMITED
Tokyo 100-0005 (JP)

(72) Inventors:
- OGAWA, Shin-ichiro
Idemitsu Kosan Co., Ltd.
Chiba-ken 299-02 (JP)
- HIRATA, Toshihiro
Idemitsu Kosan Co., Ltd.
Chiba-ken 299-02 (JP)

(74) Representative:
Türk, Gille, Hrabal
Brucknerstrasse 20
40593 Düsseldorf (DE)

(54) **HERBICIDAL COMPOSITION**

(57) A herbicide composition comprising, as active ingredients, a triazine derivative of the general formula (I),

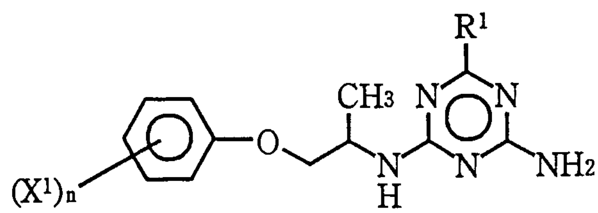

( I )

(wherein $X^1$, $R^1$ and n are as defined in the specification) or a salt thereof, and (B) at least one compound selected from the class consisting of (b1) a phenoxy herbicide, a benzoic herbicide and a pyridine herbicide, (b2) a urea herbicide, a sulfonylurea herbicide and a sulfoneamide herbicide and (b3) a dinitroaniline herbicide and a carbamate herbicide.

The herbicide composition of the present invention can effectively control a broad range of weeds, broad-leaved weeds and grass weeds in particular, at a low dosage without causing phytotoxicity on crops such as barley and wheat or lawn.

EP 0 888 714 A1

Printed by Xerox (UK) Business Services
2.16.7/3.6

## Description

### TECHNICAL FIELD

The present invention relates to a herbicide composition, more specifically to a herbicide composition which can effectively control a broad range of weeds, broad-leaved weeds and grass weeds in particular, at a low dosage without causing phytotoxicity on crops such as barley and wheat or lawn.

### TECHNICAL BACKGROUND

A variety of herbicides have been so far developed and served to improve the productivity of agricultural crops and labor saving. However, those herbicides so far developed cannot be said to have sufficiently broad herbicidal spectra, and under the circumstances, weeds hard to control are increasing in number. Herbicides having broader herbicidal spectra are therefore demanded, and there are demanded herbicides which are environmentally friendly and exhibit high herbicidal efficacy at a low dosage.

The present inventors found that a triazine derivative of the general formula (I) to be described later or a salt thereof (to be referred to as "triazine derivative (I)" hereinafter) is a compound having high safety for barley, wheat and lawn and having high herbicidal efficacy at a low dosage, and applied for a patent (WO96/25404).

While the above triazine derivative (I) has high selectivity between crops and weeds, there is demanded a herbicide which can control a broader range of weeds at a lower dosage.

### DISCLOSURE OF THE INVENTION

Under the circumstances, it is an object of the present invention to provide a herbicide composition which can effectively control a broad range of weeds, particularly broad-leaved weeds and grass weeds at a low dosage without causing phytotoxicity on crops such as barley and wheat or lawn and which can serve to further improve the productivity of agricultural crops and to attain labor saving.

The present inventors have made diligent studies and as a result, it has been found that if the above triazine derivative (I) and one or at least two herbicides selected from specific herbicides are used in combination, the above object can be achieved on the basis of a synergistic effect of these. The present invention has been completed on the basis of the above finding.

That is, the present invention provides a herbicide composition comprising, as active ingredients, (A) a triazine derivative of the general formula (I),

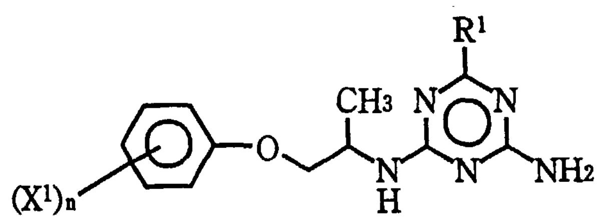

( I )

(wherein $X^1$ is a linear or branched $C_1$-$C_4$ alkyl group or a halogen atom, n is an integer of 0 to 4, provided that when n is an integer of 2 or more, a plurality of $X^1$s may be the same as, or different from, each other, and

$R^1$ is a linear or branched $C_1$-$C_{10}$ alkyl group, provided that the said alkyl group may have one substituent selected from a $C_1$-$C_4$ alkoxy group or a hydroxyl group, or may have 2 to 4 substituents of these which are the same or different),

or a slat thereof, and (B) at least one compound selected from the class consisting of (b1) a phenoxy herbicide, a benzoic herbicide and a pyridine herbicide, (b2) a urea herbicide, a sulfonylurea herbicide and a sulfoneamide herbicide and (b3) a dinitroaniline herbicide and a carbamate herbicide.

### BEST MODE FOR PRACTICING THE INVENTION

The herbicide composition of the present invention uses, as a first active ingredient, a triazine derivative of the general formula (I) which is the (A) component.

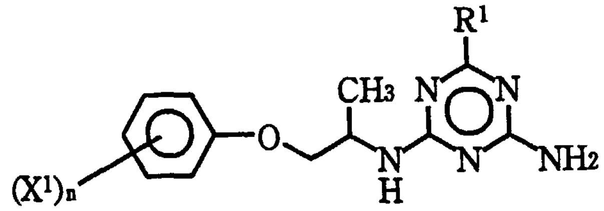

( I )

In the above general formula (I), $X^1$ is a linear or branched $C_1$-$C_4$ alkyl group or a halogen atom.

When $X^1$ is a linear or branched $C_1$-$C_4$ alkyl group, specific examples thereof include methyl, ethyl, n-propyl, i-propyl, n-butyl, i-butyl, sec-butyl, tert-butyl, cyclopropyl and cyclobutyl, and methyl is preferred.

When $X^1$ is a halogen atom, specific examples thereof include a chlorine atom, a bromine atom, fluorine atom and an iodine atom, and a fluorine atom is preferred.

The position or positions where substituent(s) $X^1$ is/are substituted may be any position(s) of 2- to 6-positions, and preferably, the above position(s) is 3- or 5-position or are both.

In the above general formula (I), n is an integer of 0 to 4, preferably 0, 1 or 2, particularly preferably 1 or 2.

When n is an integer of 2 or more, a plurality of $X^1$s may be the same as, or different from, each other.

In the above general formula (I), $R^1$ is a linear or branched $C_1$-$C_{10}$ alkyl group. And, this alkyl group may have a substituent selected from a $C_1$-$C_4$ alkoxy group or a hydroxyl group, or may have 2 to 4 substituents of these groups which are the same or different. When $R^1$ is a linear or branched $C_1$-$C_{10}$ alkyl group having none of the above substituents, specific examples thereof include those explained with regard to the $C_1$-$C_4$ alkyl group in the above $X^1$, and in addition to these, specific examples thereof include n-pentyl, i-pentyl, sec-pentyl, tert-pentyl, n-hexyl, i-hexyl, sec-hexyl, tert-hexyl, n-heptyl, i-heptyl, sec-heptyl, tert-heptyl, n-octyl, i-octyl, sec-octyl, tert-octyl, n-nonyl, i-nonyl, sec-nonyl, tert-nonyl, n-decyl, i-decyl, sec-decyl, tert-decyl, cyclopentyl, cyclohexyl and cycloheptyl. Preferred are methyl, ethyl, n-propyl, i-propyl, sec-butyl, tert-butyl, i-butyl, n-pentyl and cyclohexyl.

When $R^1$ is a $C_1$-$C_{10}$ alkyl group having a $C_1$-$C_4$ alkoxy group as a substituent, specific examples of the $C_1$-$C_4$ alkoxy group as a substituent include methoxy, ethoxy, n-propoxy, i-propoxy, n-butoxy, i-butoxy and tert-butoxy. Preferred are methoxy and tert-butoxy, and particularly preferred is methoxy.

When $R^1$ is a $C_1$-$C_{10}$ alkyl group having 2 to 4 substituents selected from $C_1$-$C_4$ alkoxy groups, hydroxyl groups and halogen atoms, these substituents may be the same as, or different from, each other.

When $R^1$ is a $C_1$-$C_{10}$ alkyl group having 1 to 4 substituents selected from $C_1$-$C_4$ alkoxy groups and hydroxyl groups, specific examples thereof include $CH_3OCH_2$-, $CH_3OC_2H_4$-, $CH_3OC_3H_6$-, $CH_3OC_4H_8$-, $C_2H_5OCH_2$-, $C_2H_5OC_2H_4$-, $C_2H_5OC_3H_6$-, $C_2H_5OC_4H_8$-, $C_2H_5OC_5H_{10}$-, $HOCH_2$-, $HOC_2H_4$-, $HOC_3H_6$-, $HOC_4H_8$-, $(CH_3O)_2CH$-, $(CH_3O)_2C_2H_3$-, $(CH_3O)C_3H_5$-, $(CH_3O)_2C_4H_7$-, $CH_3(OCH_3)CH$-, $C_2H_5(OCH_3)CH$-, $CH_3OCH_2(CH_3)CH$-, $CH_3O(CH_3)_2C$-, $(CH_3O)_3COCH_2$-, $CH_2OH(CH_3)_2C$-, $(CH_3)_2COH$-, $C_2H_5(OH)CH$-, methoxy-substituted cyclopropyl, methoxy-substituted cyclobutyl, methoxy-substituted cyclopentyl, methoxy-substituted cyclohexyl, ethoxy-substituted cyclopentyl and ethoxy-substituted cyclohexyl.

$R^1$ is preferably a linear or branched $C_1$-$C_8$ alkyl group having 1 to 4 substituents selected from $C_2$-$C_4$ alkoxy groups and hydroxyl groups. $R^1$ is more preferably a linear or branched $C_1$-$C_4$ alkyl group substituted with 1 or 2 $C_1$-$C_4$ alkoxy groups, specifically, 1 or 2 methoxy groups or one butoxy group, or a linear or branched $C_1$-$C_4$ alkyl group substituted with one hydroxyl group. $R^1$ is further preferably a linear or branched $C_1$-$C_4$ alkyl group substituted with one methoxy and one hydroxyl.

The triazine derivative (I) includes optical isomers and are known as a racemic compound. Enantiomers of one type alone can be obtained by a known method such as an asymmetric synthesis. The triazine derivative (I) in the present invention exhibits herbicidal activity even if it is a racemic compound or even if it is one optical isomer alone. The triazine derivative (I) includes the above recemic compound and each of the above optical isomers.

Further, an inorganic acid or organic acid salt of the triazine derivative (I) can be used as a herbicidally active ingredient.

Examples of the above acid which can form a salt with the triazine derivative of the general formula (I) include inorganic acids such as hydrochloric acid, hydriodic acid, hydrobromic acid, hydrofluoric acid, sulfuric acid, nitric acid and phosphoric acid; and organic acids such as acetic acid and sulfonic acids including methanesulfonic acid and toluenesulfonic acid.

The following Tables 1 to 6 show specific examples of the triazine derivative (I), and Tables 7 to 9 show physical properties of Compounds A-1 to A-24.

Table 1

| Compound No. | Structural formula | Compound Name |
|---|---|---|
| A-1 | 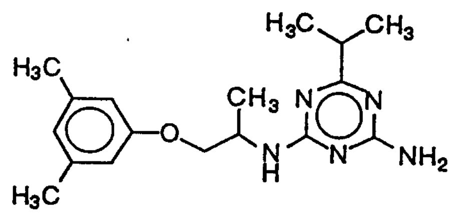 | 2-amino-4-isopropyl-6-[2-(3′,5′-dimethylphenoxy)-1-methyl-ethylamino]-1,3,5-triazine |
| A-2 | 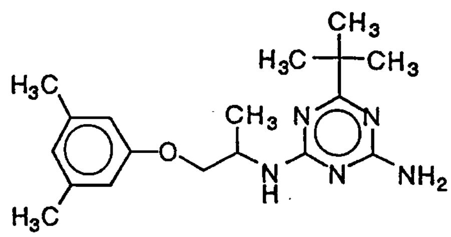 | 2-amino-4-t-butyl-6-[2-(3′,5′-dimethylphenoxy)-1-methyl-ethylamino]-1,3,5-triazine |
| A-3 | 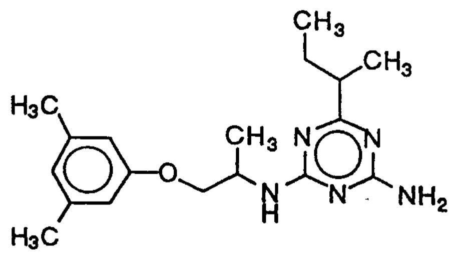 | 2-amino-4-sec-butyl-6-[2-(3′,5′-dimethylphenoxy)-1-methyl-ethylamino]-1,3,5-triazine |
| A-4 | 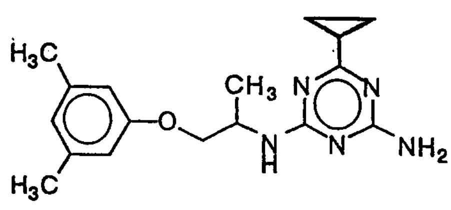 | 2-amino-4-cyclopropyl-6-[2-(3′,5′-dimethylphenoxy)-1-methyl-ethylamino]-1,3,5-triazine |

Table 2

| Compound No. | Structural formula | Compound Name |
|---|---|---|
| A-5 | 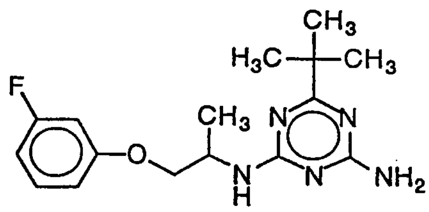 | 2-amino-4-t-butyl-6-[2-(3′-fluorophenoxy)-1-methyl-ethylamino]-1,3,5-triazine |
| A-6 | 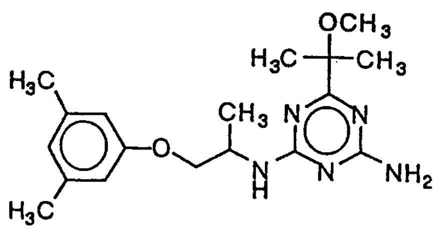 | 2-amino-4-(α-methoxy-α-methylethyl)-6-[2-(3′,5′-dimethylphenoxy)-1-methyl-ethylamino]-1,3,5-triazine |
| A-7 | 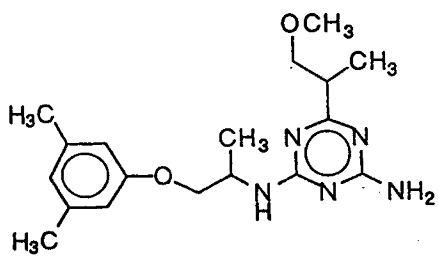 | 2-amino-4-(α-methyl-β-methoxylethyl)-6-[2-(3′,5′-dimethylphenoxy)-1-methyl-ethylamino]-1,3,5-triazine |
| A-8 | 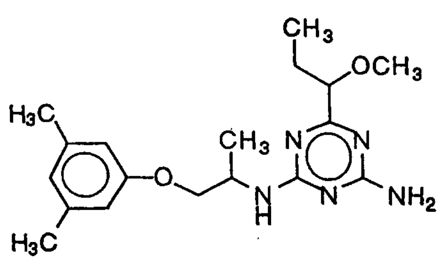 | 2-amino-4-(α-methoxy-n-propyl)-6-[2-(3′,5′-dimethylphenoxy)-1-methyl-ethylamino]-1,3,5-triazine |

Table 3

| Compound No. | Structural formula | Compound Name |
|---|---|---|
| A-9 | 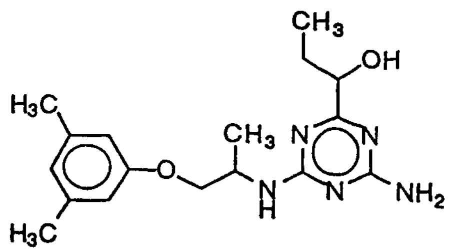 | 2-amino-4-(α-hydroxy-n-propyl)-6-[2-(3′,5′-dimethylphenoxy)-1-methyl-ethylamino]-1,3,5-triazine |
| A-10 | 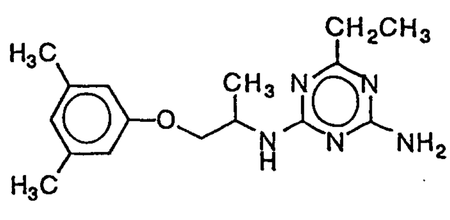 | 2-amino-4-ethyl-6-[2-(3′,5′-dimethylphenoxy)-1-methyl-ethylamino]-1,3,5-triazine |
| A-11 | 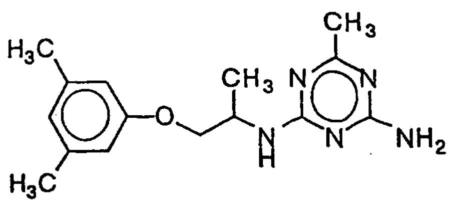 | 2-amino-4-methyl-6-[2-(3′,5′-dimethylphenoxy)-1-methyl-ethylamino]-1,3,5-triazine |
| A-12 | 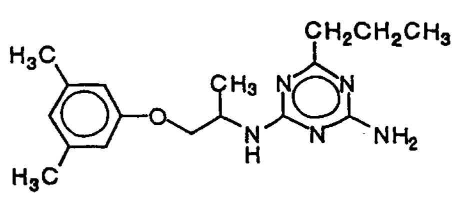 | 2-amino-4-n-propyl-6-[2-(3′,5′-dimethylphenoxy)-1-methyl-ethylamino]-1,3,5-triazine |

Table 4

| Compound No. | Structural formula | Compound Name |
|---|---|---|
| A-13 | 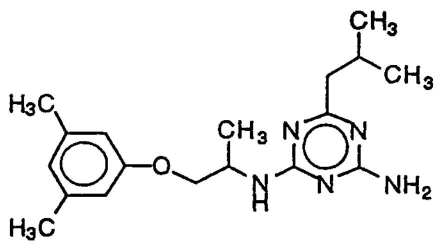 | 2-amino-4-(β-methyl-n-propyl)-6-[2-(3′,5′-dimethylphenoxy)-1-methyl-ethylamino]-1,3,5-triazine |
| A-14 | 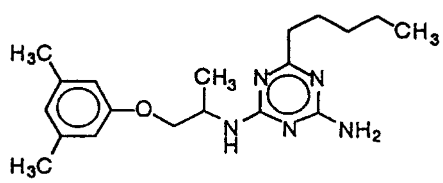 | 2-amino-4-n-pentyl-6-[2-(3′,5′-dimethylphenoxy)-1-methyl-ethylamino]-1,3,5-triazine |
| A-15 | 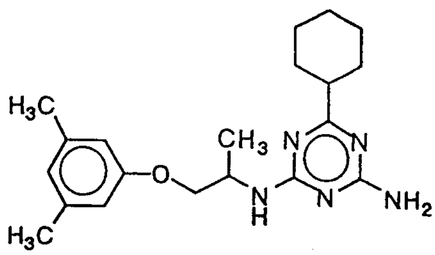 | 2-amino-4-cyclohexyl-6-[2-(3′,5′-dimethylphenoxy)-1-methyl-ethylamino]-1,3,5-triazine |
| A-16 | 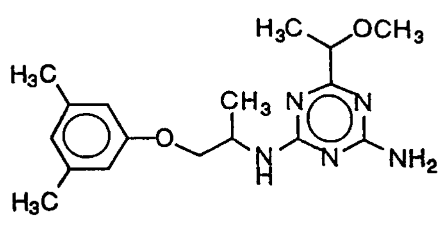 | 2-amino-4-(α-methoxy-ethyl-6-[2-(3′,5′-dimethylphenoxy)-1-methyl-ethylamino]-1,3,5-triazine |

Table 5

| Compound No. | Structural formula | Compound Name |
|---|---|---|
| A-17 | 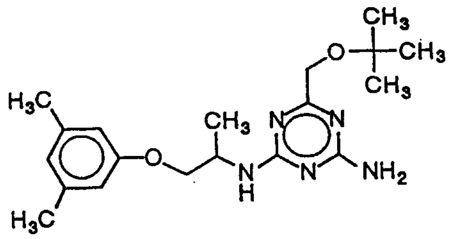 | 2-amino-4-t-butoxy-methyl)-6-[2-(3',5'-dimethylphenoxy)-1-methyl-ethylamino]-1,3,5-triazine |
| A-18 | 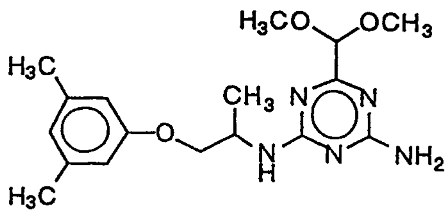 | 2-amino-4-dimethoxy-methyl-6-[2-(3',5'-dimethylphenoxy)-1-methyl-ethylamino]-1,3,5-triazine |
| A-19 | 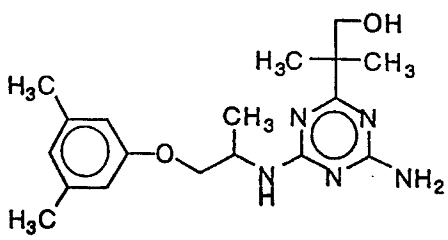 | 2-amino-4-(β-hydroxy-methyl-α-methylethyl)-6-[2-(3',5'-dimethylphenoxy)-1-methyl-ethylamino]-1,3,5-triazine |
| A-20 | 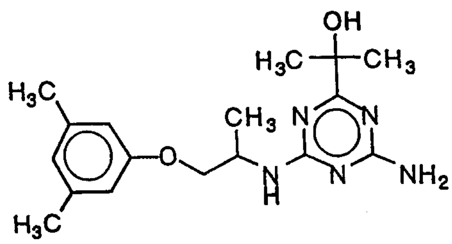 | 2-amino-4-(α-hydroxy-α-methylethyl)-6-[2-(3',5'-dimethylphenoxy)-1-methyl-ethylamino]-1,3,5-triazine |

Table 6

| Compound No. | Structural formula | Compound Name |
|---|---|---|
| A-21 | 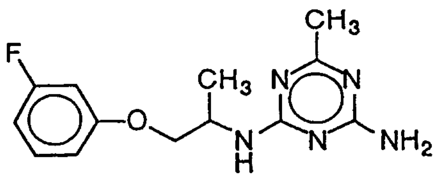 | 2-amino-4-methyl-6-[2-(3'-fluorophenoxy)-1-methyl-ethylamino]-1,3,5-triazine |
| A-22 | 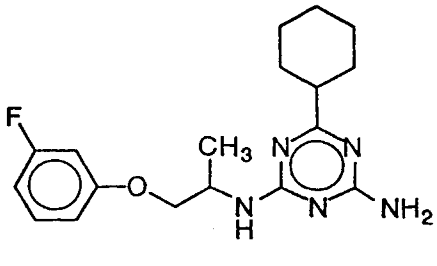 | 2-amino-4-cyclohexyl-6-[2-(3'-fluorophenoxy)-1-methyl-ethylamino]-1,3,5-triazine |
| A-23 | 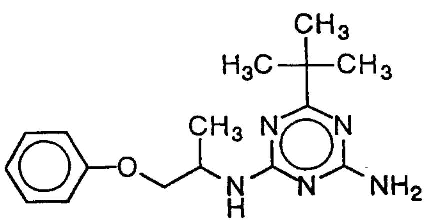 | 2-amino-4-t-butyl-6-[2-penoxy-1-methyl-ethylamino]-1,3,5-triazine |
| A-24 | 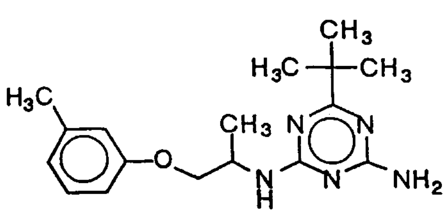 | 2-amino-4-t-butyl-6-[2-(3'-methylphenoxy)-1-methyl-ethylamino]-1,3,5-triazine |

Table 7

| Example No. | IR($cm^{-1}$)*1 s-triazine | $^1$H-NMR*2 |
|---|---|---|
| A−1 *3 | 1570 | 1.22(6H, d, J=7.2Hz, $CH_3CHCH_3$), 1.36(3H, d,J=7.2Hz, $CHCH_3$) 2.28(6H, s, $ArCH_3 \times 2$), 2.40-2.90(1H, m, $CH_3CHCH_3$), 3.75-4.20(2H, m, $OCH_2$), 4.25-4.70(1H, m, CHNH), 5.05-5.55(3H, m, NH, $NH_2$), 6.45-6.70(3H, m, $C_6H_3$) |
| A−2 *4 | 1570 | 1.28(9H, s, $CCH_3 \times 3$), 1.34(3H, d, J=7.2Hz, $CHCH_3$), 2.28(6H, s, $ArCH_3 \times 2$), 3.75-4.20(2H, m, $OCH_2$), 4.25-4.65(1H, m, CHNH), 5.10-5.50(3H, m, NH, $NH_2$), 6.45-6.70(3H, m, $C_6H_3$) |
| A−3 | 1590 | 0.91(3H, t, J=8.1Hz, $CH_2CH_3$), 1.21(3H, d,J=7.2Hz,$CH_2CHCH_3$) 1.36(3H, d, J=7.2Hz, $CHCH_3$), 1.30-1.95(2H, m, $CH_2CH_3$), 2.29(6H, s, $ArCH_3 \times 2$), 2.20-2.70(1H, m, $CH_2CHCH_3$) 3.70-4.20(2H, m, $OCH_2$), 4.25-4.65(1H, m, CHNH), 5.00-5.50(3H, m, NH, $NH_2$), 6.40-6.70(3H, m, $C_6H_3$) |
| A−4 | 1570 | 0.80-1.15(4H, m, $CHCH_2CH_2$), 1.32(3H, d, J=6.8Hz, $CHCH_3$) 1.50-1.90(1H, m, $CHCH_2CH_2$), 2.27(6H, s, $ArCH_3x2$) 3.75-4.10(2H, m, $OCH_2$), 4.20-4.60(1H, m, CHNH) 5.10-5.60(3H, m, NH, $NH_2$), 6.45-6.65(3H, m, $C_6H_3$) |
| A−5 | 1565 | 1.25(9H, s, $CCH_3 \times 3$), 1.36(3H, d, J=7.2Hz, $CHCH_3$), 3.75-4.20(2H, m, $OCH_2$), 4.25-4.65(1H, m, CHNH), 4.90-5.40(3H, m, NH, $NH_2$), 6.40-7.40(4H, m, $C_6H_4$) |
| A−6 | 1555 | 1.37(3H, d, J=7.2Hz, $CHCH_3$), 1.51(6H, s, $CCH_3 \times 2$), 2.28(6H, s, $ArCH_3 \times 2$), 3.23(3H, s, $OCH_3$), 3.80-4.15(2H, m, $OCH_2$), 4.20-4.65(1H, m, CHNH), 5.35-5.90(3H, m, NH, $NH_2$), 6.40-6.70(3H, m, $C_6H_3$) |
| A−7 | 1565 | 1.20(3H, t, J=7.2Hz, $CH_2CHCH_3$), 1.35(3H, d,J=7.2Hz, $CHCH_3$) 2.29(6H, s, $ArCH_3 \times 2$), 2.70-3.10(1H, m, Triazine-CH), 3.20-3.80(2H, m, $CH_3OCH_2$), 3.34(3H, s, $OCH_3$), 3.80-4.15(2H, m, $OCH_2$), 4.20-4.65(1H, m, CHNH), 5.10-5.60(3H, m, NH, $NH_2$), 6.40-6.70(3H, m, $C_6H_3$) |
| A−8 | 1570 | 0.98(3H, t, J=6.3Hz, $CH_2CH_3$), 1.36(3H, d, J=7.2Hz, $CHCH_3$), 1.55-2.10(2H, m, $CH_2CH_3$), 2.27(6H, s, $ArCH_3 \times 2$), 3.36(3H, s, $OCH_3$), 3.65-4.00(1H, m, OCH), 3.75-4.15(2H, m, $OCH_2$), 4.20-4.70(1H, m, CHNH), 5.20-5.70(3H, m, NH, $NH_2$), 6.40-6.70(3H, m, $C_6H_3$) |

*1) Potassium bromide tablet method

*2) Solvent: Deuterochloroform, Internal standard: Tetramethylsilane (TMS)

*3) Melting point: 86.4°C - 88.6°C

*4) Melting point: 107.5°C - 110.3°C

Table 8

| Example No. | IR($cm^{-1}$)*1 s-triazine | $^1H-NMR$*2 |
|---|---|---|
| A-9 | 1560 | 0.98(3H, t, J=8.1Hz, $CH_2C\underline{H_3}$), 1.37(3H, d, J=7.2Hz, $CHC\underline{H_3}$), 1.55-2.15(2H, m, $C\underline{H_2}CH_3$), 2.27(6H, s, $ArC\underline{H_3}\times 2$), 3.80-4.15(3H, m, $OC\underline{H_2}$, $OC\underline{H}$), 4.15-4.70(2H, m, $O\underline{H}$, $C\underline{H}NH$), 4.90-5.60(3H, m, $N\underline{H}$, $N\underline{H_2}$), 6.40-6.70(3H, m, $C_6\underline{H_3}$) |
| A-10 | 1560 | 1.22(3H, t, J=8.1Hz, $CH_2C\underline{H_3}$), 1.32(3H, t, J=7.2Hz, $CHC\underline{H_3}$), 2.27(6H, s, $ArC\underline{H_3}\times 2$), 2.45(2H, q, J=8.1Hz, $C\underline{H_2}CH_3$), 3.80-4.05(2H, m, $OC\underline{H_2}$), 4.25-4.60(1H, m, $C\underline{H}NH$), 6.40-6.65(3H, m, $C_6\underline{H_3}$) |
| A-11 | 1575 | 1.35(3H, d, J=7.2Hz, $CHC\underline{H_3}$), 1.98(3H, s, Triazine-$C\underline{H_3}$), 2.27(6H, s, $ArC\underline{H_3}\times 2$), 3.75-4.10(2H, m, $OC\underline{H_2}$), 4.25-4.70(1H, m, $C\underline{H}NH$), 5.10-5.60(3H, m, $N\underline{H}$, $N\underline{H_2}$), 6.45-6.70(3H, m, $C_6\underline{H_3}$) |
| A-12 | 1550 | 0.99(3H, t, J=8.1Hz, $CH_2C\underline{H_3}$), 1.36(3H, d, J=7.2Hz, $CHC\underline{H_3}$), 1.50-2.00(2H, m, $C\underline{H_2}CH_3$), 2.29(6H, s, $ArC\underline{H_3}\times 2$), 2.20-2.60(2H, m, $C\underline{H_2}CH_2CH_3$) 3.70-4.10(2H, m, $OC\underline{H_2}$), 4.15-4.70(1H, m, $C\underline{H}NH$), 5.00-5.70(3H, m, $N\underline{H}$, $N\underline{H_2}$), 6.40-6.70(3H, m, $C_6\underline{H_3}$) |
| A-13 | 1560 | 0.97(6H, d, J=6.3Hz, $C\underline{H_3}CHC\underline{H_3}$), 1.36(3H, d,J=7.2Hz, $CHC\underline{H_3}$) 2.00-2.40(3H, m, $C\underline{H_2}C\underline{H}$), 2.30(6H, s, $ArC\underline{H_3}\times 2$), 3.80-4.15(2H, m, $OC\underline{H_2}$), 4.20-4.65(1H, m, $C\underline{H}NH$), 5.05-5.50(3H, m, $N\underline{H}$, $N\underline{H_2}$), 6.45-6.70(3H, m, $C_6\underline{H_3}$) |
| A-14 | 1555 | 0.90(3H, t, J=7.2Hz, $CH_2C\underline{H_3}$), 1.36(3H, d, J=7.2Hz, $CHC\underline{H_3}$), 1.10-1.50(4H, m, $C\underline{H_2}C\underline{H_2}CH_3$), 1.50-1.95(2H, m, Triazine-$CH_2C\underline{H_2}$), 2.26(6H, s, $ArC\underline{H_3}\times 2$), 2.25-2.65(2H, m, Triazine-$C\underline{H_2}$), 3.70-4.15(2H, m, $OC\underline{H_2}$), 4.20-4.70(1H, m, $C\underline{H}NH$), 5.10-5.60(3H, m, $N\underline{H}$, $N\underline{H_2}$), 6.40-6.70(3H, m, $C_6\underline{H_3}$) |
| A-15 | 1555 | 1.36(3H, d, J=7.2Hz, $CHC\underline{H_3}$), 1.15-2.10(10H, m, $C\underline{H_2}\times 5$), 2.27(6H, s, $ArC\underline{H_3}\times 2$), 2.35-2.60(1H, m, Triazine-$C\underline{H}$), 3.75-4.15(2H, m, $OC\underline{H_2}$), 4.20-4.70(1H, m, $C\underline{H}NH$), 5.00-5.50(3H, m, $N\underline{H}$, $N\underline{H_2}$), 6.40-6.70(3H, m, $C_6\underline{H_3}$) |
| A-16 | 1575 | 1.36(3H, d, J=7.2Hz, $CHC\underline{H_3}$), 1.42(3H, d, J=8.1Hz, $C\underline{H_3}CHO$), 2.26(6H, s, $ArC\underline{H_3}\times 2$), 3.36(3H, s, $OC\underline{H_3}$), 3.80-4.15(2H, m, $OC\underline{H_2}$), 3.95-4.20(1H, m, $OC\underline{H}$), 4.20-4.70(1H, m, $C\underline{H}NH$), 5.35-6.15(3H, m, $N\underline{H}$, $N\underline{H_2}$), 6.40-6.70(3H, m, $C_6\underline{H_3}$) |

*1) Potassium bromide tablet method

*2) Solvent: Deuterochloroform, Internal standard: Tetramethylsilane (TMS)

Table 9

| Example No. | IR(cm$^{-1}$)*1 s-triazine | $^1$H−NMR*2 |
|---|---|---|
| A−17 | 1570 | 1.30(9H, s, $CCH_3$×3), 1.35(3H, d, J=7.2Hz, $CHCH_3$), 2.28(6H, s, $ArCH_3$×2), 3.75-4.15(2H, m, $OCH_2$), 4.25(2H, s, Triazine-$CH_2$), 4.25-4.65(1H, m, CHNH), 5.05-5.80(3H, m, NH, $NH_2$), 6.45-6.70(3H, m, $C_6H_3$) |
| A−18 | 1570 | 1.35(3H, d, J=7.2Hz, $CHCH_3$), 2.29(6H, s, $ArCH_3$×2), 3.44(6H, s, $OCH_3$×2), 3.80-4.15(2H, m, $OCH_2$), 4.20-4.70(1H, m, CHNH), 5.00(1H, s, OCH), 5.60-6.30(3H, m, NH, $NH_2$), 6.45-6.70(3H, m, $C_6H_3$) |
| A−19 | 1570 | 1.25(6H, s, $CCH_3$×2), 1.36(3H, d, J=7.2Hz, $CHCH_3$), 2.30(6H, s, $ArCH_3$×2), 3.62(2H, s, $CH_2OH$), 3.80-4.15(2H, m, $OCH_2$), 4.25-4.65(1H, m, CHNH), 4.78(1H, s, OH), 5.05-5.60(3H, m, NH, $NH_2$), 6.45-6.70(3H, m, $C_6H_3$) |
| A−20 | 1560 | 1.38(3H, d, J=7.2Hz, $CHCH_3$), 1.47(6H, s, $CCH_3$×2), 2.30(6H, s, $ArCH_3$×2), 3.80-4.15(2H, m, $OCH_2$), 4.25-4.70(1H, m, CHNH), 4.69(1H, s, OH), 4.90-5.55(3H, m, NH, $NH_2$), 6.45-6.70(3H, m, $C_6H_3$) |
| A−21 | 1570 | 1.35(3H, d, J=7.2Hz, $CHCH_3$), 2.28(3H, s, Triazine-$CH_3$), 3.75-4.20(2H, m, $OCH_2$), 4.25-4.70(1H, m, CHNH), 5.20-5.70(3H, m, NH, $NH_2$), 6.45-7.40(4H, m, $C_6H_4$) |
| A−22 | 1560 | 1.36(3H, d, J=7.2Hz, $CHCH_3$), 1.10-2.10(10H, m, $CH_2$×5), 2.10-2.60(1H, m, Triazine-CH), 3.75-4.20(2H, m, $OCH_2$), 4.20-4.80(1H, m, CHNH), 4.80-5.40(3H, m, NH, $NH_2$), 6.45-7.40(4H, m, $C_6H_4$) |
| A−23 | 1570 | 1.26(9H, s, $CCH_3$×3), 1.36(3H, d, J=7.2Hz, $CHCH_3$), 3.80-4.20(2H, m, $OCH_2$), 4.30-4.80(1H, m, CHNH), 5.10-5.75(3H, m, NH, $NH_2$), 6.80-7.45(5H, m, $C_6H_5$) |
| A−24 | 1570 | 1.27(9H, s, $CCH_3$×3), 1.36(3H, d, J=7.2Hz, $CHCH_3$), 2.33(3H, s, $ArCH_3$), 3.80-4.20(2H, m, $OCH_2$), 4.25-4.80(1H, m, CHNH), 5.05-5.65(3H, m, NH, $NH_2$), 6.60-7.25(4H, m, $C_6H_4$) |

*1) Potassium bromide tablet method

*2) Solvent: Deuterochloroform, Internal standard: Tetramethylsilane (TMS)

The triazine derivative (I) which is (A) component of the herbicide composition of the present invention can be produced by the method described in Japanese Patent Application No. 7-29124 filed by the present Applicant and International Laid-open Publication No. 96-25404.

That is, it can be produced by reacting a salt of alkyl biguanide (XII) with an ester (XIII) according to the following reaction scheme,

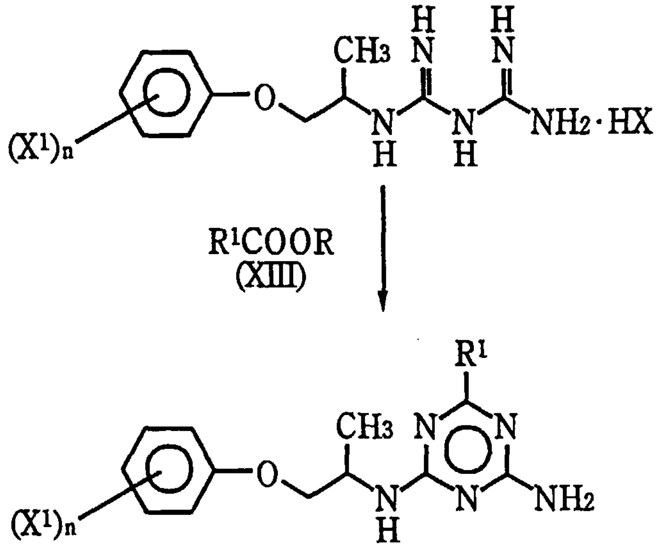


(XII)

(I)

(wherein $X^1$, n and $R^1$ are as defined in the above general formula (I), X is a halogen atom and R is a $C_1$-$C_4$ alkyl group).

The above reaction is preferably carried out in the presence of a catalyst. Examples of the catalyst that can be used in the above reaction include alkoxides such as sodium methoxide, sodium ethoxide and magnesium diethoxide; inorganic bases such as sodium phosphate, calcium carbonate, sodium hydroxide and potassium hydroxide; and organic bases such as 1,8-diazabicyclo[5,4,0]-undecene (DBU), 1,5-diazabicyclo[4,3,0]-5-nonene (DBN), triethylamine and pyridine. Sodium methoxide and sodium ethoxide are preferred.

The amount of the catalyst is generally 1.1 to 10 equivalent weights, preferably 1.5 to 2 equivalent weights, based on the salt of alkyl biguanide (XII).

The amount of the ester used in the above reaction is generally 1 to 10 equivalent weights, preferably 1 to 2 equivalent weights, based on the salt of alkyl biguanide (XII).

The above reaction is preferably carried out in the presence of a solvent. Examples of the solvent that can be used in the above reaction include alcohols such as methanol, ethanol and isopropanol; ketones such as acetone, methyl ethyl ketone and cyclohexanone; aliphatic hydrocarbons such as n-hexane, n-heptane and n-decane; cyclic hydrocarbons such as benzene, decalin and alkylnaphthalene; chlorinated hydrocarbons such as methylene dichloride, chlorobenzene and dichlorobenzene; and ethers such as tetrahydrofuran and dioxane. Alcohols are preferred, and methanol and ethanol are particularly preferred.

The above reaction may use a dehydrating agent for preventing the hydrolysis of the ester (XIII). Examples of the dehydrating agent that can be used in the above reaction include molecular sieve, anhydrous calcium sulfate, anhydrous sodium sulfate, sodium carbonate, calcium oxide, aluminum oxide, magnesium oxide, potassium carbonate and barium oxide. Molecular sieve and anhydrous calcium sulfate are particularly preferred. The amount of the dehydrating agent is 10 to 200 % by weight, preferably 50 to 100 % by weight, based on the salt of alkyl biguanide (XII).

The reaction temperature of the above reaction is generally -10 to 150°C, preferably -10 to 120°C. The time period of the reaction is generally 2 to 30 hours, preferably approximately 10 to 15 hours.

After completion of the reaction, according to a conventional method, a reaction mixture is poured into water, the end product is extracted with an organic solvent such as ethyl acetate, an obtained organic layer is dehydrated with a dehydrating agent such as anhydrous sodium sulfate, and then the organic solvent is removed by means of distillation under reduced pressure, and the like. An obtained residue is purified by means of silica gel column chromatography and the like, whereby the triazine derivative (I) as an end product can be isolated.

The herbicide composition of the present invention contains, as a second active ingredient, a herbicide which is a component (B) and comes under the four groups of (b1) to (b3). With regard to the component (B), each group will be explained below.

(b1) group

Herbicides coming under the (b1) group are a phenoxy herbicide, a benzoic herbicide and pyridine herbicide.

Of the herbicides coming under the above (b1) group, the phenoxy herbicide is preferably a compound of the following general formula (III) (to be referred to as "phenoxy herbicide (III)" hereinafter),

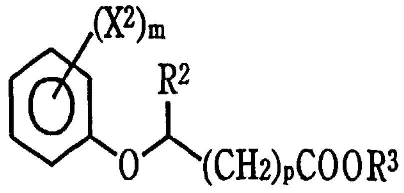

(III)

(wherein $X^2$ is a halogen atom or a linear or branched $C_1$-$C_4$ alkyl group on which a halogen atom may be substituted, m is an integer of 0 to 5, provided that when m is an integer of 2 or more, a plurality of $X^2$s may be the same as, or different from, each other; $R^2$ is a hydrogen atom or a linear or branched $C_1$-$C_4$ alkyl group; $R^3$ is a hydrogen atom or a linear or branched $C_1$-$C_4$ alkyl group, and p is an integer of 0 to 4).

Specific examples of $X^2$ in the above general formula (III) when $X^2$ is a halogen atom, and specific examples of $R^2$ and $R^3$ when each of $R^2$ and $R^3$ in the above general formula (III) is a linear or branched $C_1$-$C_4$ alkyl group, include those explained with regard to the already described general formula (I), and are therefore omitted. $X^2$ is preferably a chlorine atom. $R^2$ is preferably a hydrogen atom. $R^3$ is preferably a hydrogen atom.

When $X^2$ in the above general formula (III) is a linear or branched $C_1$-$C_4$ alkyl group on which a halogen atom may be substituted, specific examples thereof include $-CH_2F$, $-CH_2Cl$, $-CF_3$ and $-CCl_3$.

Specific examples of the phenoxy herbicide (III) used in the present invention are as follows.

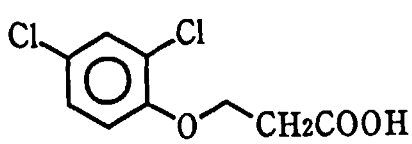

2,4-D

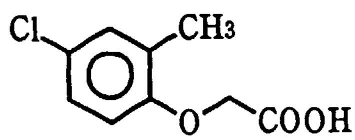

MCPA

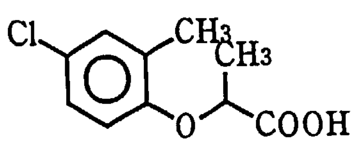

MCPP

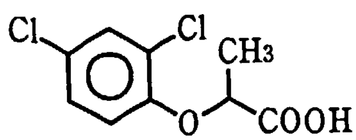

Dichloroprop

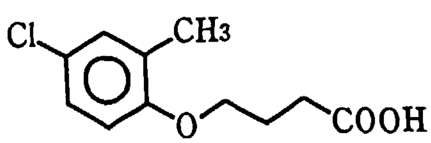

MCPB

Further, of the herbicides coming under the (b1) group, the benzoic herbicide is preferably a compound of the general formula (IV) (to be referred to as "benzoic herbicide (IV)" hereinafter),

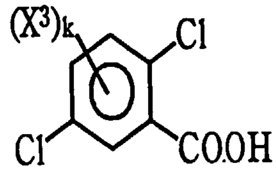

(IV)

(wherein $X^3$ is a halogen atom, a linear or branched $C_1$-$C_4$ alkoxy group, an amino group or a nitro group and k is an integer of 0 to 3, provided that when k is an integer of 2 or more, a plurality of $X^3$s may be the same as, or different from, each other).

When $X^3$ in the above general formula (IV) is a halogen atom or a linear or branched $C_1$-$C_4$ alkoxy group, specific examples thereof include those explained with regard to the already described general formula (I) and are therefore omitted. $X^3$ is preferably a chlorine atom, a methoxy group or an amino group, and k is preferably 1 or 2.

Specific examples of the benzoic herbicide (IV) used in the present invention are as follows.

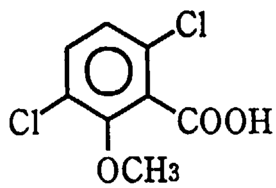

Dicamba

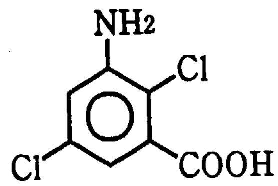

Amiben

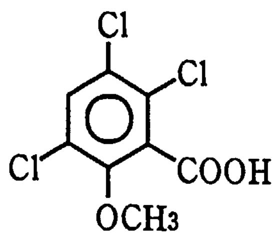

Tricamba

Further, of the herbicides coming under the (b1) group, the pyridine herbicide is preferably a compound of the general formula (V) (to be referred to as "pyridine herbicide (V)" hereinafter),

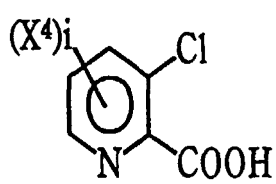

(V)

(wherein $X^4$ is a halogen atom or an amino group and i is an integer of 0 to 3, provided that when i is an integer of 2 or more, a plurality of $X^4$s may be the same as, or different from, each other), or a compound of the general formula (VI) (to be referred to as "pyridine herbicide (VI)" hereinafter),

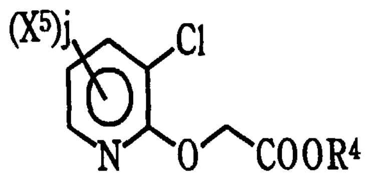

(VI)

(wherein $X^5$ is a halogen atom or an amino group, j is an integer of 0 to 3, provided that when j is an integer of 2 or more, a plurality of $X^5$s may be the same as, or different from, each other, and $R^4$ is a hydrogen atom or a linear or branched $C_1$-$C_{10}$ alkyl group).

Specific examples of $X^4$ and $X^5$ which are halogen atoms in the above general formula (V) or (VI) and specific examples of $R^4$ which is a linear or branched $C_1$-$C_{10}$ alkyl group in the above formula (VI) include those described with regard to the already described general formula (I) and are therefore omitted. $X^4$ is preferably a chlorine atom or an amino group, and i is preferably 1 to 3. $X^5$ is preferably a chlorine atom, a fluorine atom or an amino group, and j is preferably 2 or 3. $R^4$ is preferably an $\alpha$-methyl-heptyl group.

Specific examples of the pyridine herbicides (V) and (VI) used in the present invention are as follows.

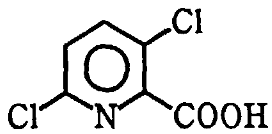

Clopyralid

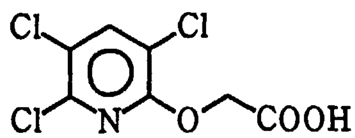

Triclopyr

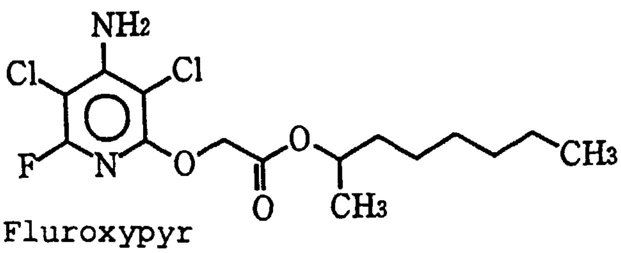

Fluroxypyr

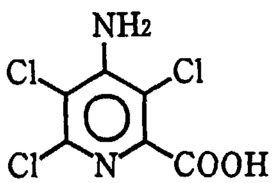

Picloram

The phenoxy herbicide, the benzoic herbicide and the pyridine herbicide of the (b1) group, used in the present invention, can be commercially acquired or can be produced according to known methods in the field of the concerned art.

<u>(b2) group</u>

Herbicides coming under the (b2) group are a urea herbicide, a sulfonylurea herbicide and a sulfoneamide herbicide.

Of the herbicides coming under the (b2) group, the urea herbicide is preferably a compound of the following general formula (VII) (to be referred to as "urea herbicide (VII)" hereinafter).

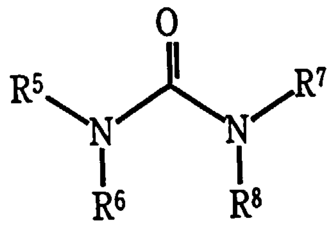

(VII)

(wherein $R^5$ is an optionally substituted phenyl group or aromatic heterocyclic group, $R^6$ is a hydrogen atom or a linear or branched $C_1$-$C_6$ alkyl group, $R^7$ is a linear or branched $C_1$-$C_6$ alkyl group, and $R^8$ is a hydrogen atom, a linear or branched $C_1$-$C_6$ alkyl group or a linear or branched $C_1$-$C_6$ alkoxy group).

When $R^5$ in the above general formula (VII) is a non-substituted aromatic heterocyclic group, specific examples thereof include residues of thiadiazole, benzothiazole, isoxazole and oxadiazolone.

When $R^5$ is a substituted phenyl group or aromatic heterocyclic group, specific examples of the substituent include a halogen atom, a $C_1$-$C_4$ alkyl group, a $C_1$-$C_4$ haloalkyl group, a $C_1$-$C_4$ haloalkoxy group, a $C_1$-$C_4$ alkoxy group, a $C_1$-$C_4$ haloalkylthio group, a $C_1$-$C_4$ haloalkenyloxy group, a substituted aryloxy group, a $C_1$-$C_4$ alkylaminocarbonyloxy group, a $C_1$-$C_4$ alkylsulfonyl group, a $C_1$-$C_4$ alkylaminosulfonyl group and a benzyloxy group.

When $R^6$, $R^7$ or $R^8$ is a linear or branched $C_1$-$C_6$ alkyl group, specific examples thereof include, in addition to those of the $C_1$-$C_4$ alkyl group explained with regard to the already described general formula (I), n-pentyl, i-pentyl, sec-pentyl, tert-pentyl, n-hexyl, i-hexyl, sec-hexyl, tert-hexyl, cyclopentyl and cyclohexyl.

When $R^8$ is a linear or branched $C_1$-$C_6$ alkoxy group, specific examples thereof include, in addition to those of the $C_1$-$C_4$ alkoxy group explained with regard to the already described general formula (I), n-pentoxy, i-pentoxy, sec-pentoxy, tert-pentoxy, n-hexoxy, i-hexoxy, sec-hexoxy, tert-hexoxy, cyclopentoxy and cyclohexoxy.

$R^5$ is preferably 3,4-dichlorophenyl, 3-chloro-4-methylphenyl, 4-i-propylphenyl or a benzothiazole group.

$R^6$ is preferably a hydrogen atom or methyl.

$R^7$ is preferably methyl or methoxy.

$R^8$ is preferably a hydrogen atom or methyl.

Specific examples of the urea herbicide (VII) used in the present invention are as follows.

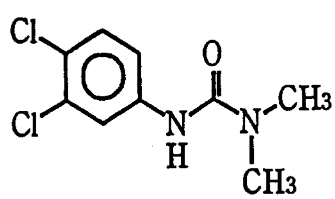

Diuron

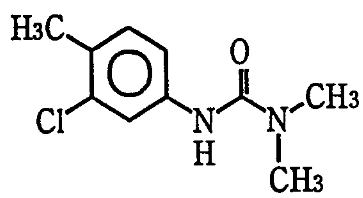

Chlorotoluron

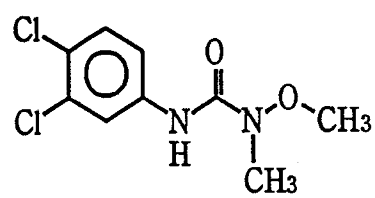

Linuron

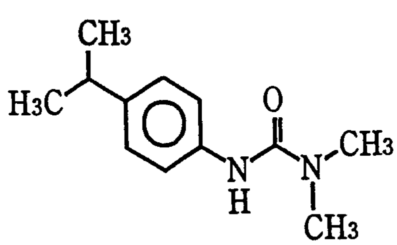

Isoproturon

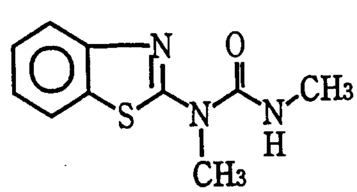

Methabenzthiazuron

Further, of the herbicides coming under the (b2) group, the sulfonylurea herbicide is preferably a compound of the following general formula (VIII) (to be referred to as "sulfonylurea herbicide (VIII)" hereinafter).

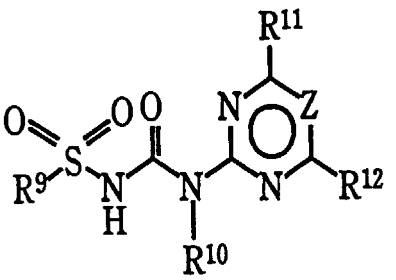

(VIII)

(wherein Z is a nitrogen atom or a carbon atom, $R^9$ is an optionally substituted phenyl group, aromatic heterocyclic group or sulfoneamide group, $R^{10}$ is a hydrogen atom or a linear or branched $C_1$-$C_6$ alkyl group, $R^{11}$ is a hydrogen atom, a linear or branched $C_1$-$C_6$ alkyl group, a linear or branched $C_1$-$C_6$ alkoxy group or a linear or branched $C_1$-$C_6$ haloalkoxy group, $R^{12}$ is a hydrogen atom, a linear or branched $C_1$-$C_6$ alkyl group, a linear or branched $C_1$-$C_6$ alkoxy group or a linear or branched $C_1$-$C_6$ haloalkoxy group).

In the above general formula (VIII), when $R^9$ is a non-substituted aromatic heterocyclic group, when $R^{10}$, $R^{11}$ or $R^{12}$ is a linear or branched $C_1$-$C_6$ alkyl group, and when $R^{11}$ or $R^{12}$ is a linear or branched $C_1$-$C_6$ alkoxy group, specific examples of these include those explained with regard to the above general formula (VII) and are omitted.

When $R^9$ is a substituted phenyl group, aromatic heterocyclic group or sulfoneamide group, specific examples of the substituent include a halogen atom, a $C_1$-$C_4$ alkyl group, a $C_1$-$C_4$ alkoxycarbonyl group, a $C_1$-$C_4$ alkoxy group on which a halogen atom is substituted, a $C_1$-$C_4$ alkylsulfonyl group, and a carbamoyl group on which a $C_1$-$C_4$ alkyl group may be substituted.

When $R^{11}$ or $R^{12}$ is a linear or branched $C_1$-$C_6$ haloalkoxy group, specific examples thereof include those formed by substituting one or more halogen atoms on the linear or branched $C_1$-$C_6$ alkoxy group explained with regard to the above general formula (VII).

$R^9$ is preferably o-chlorophenyl, o-methoxycarbonylphenyl, p-chloroethoxyphenyl, 3-ethylsulfonylpyridin-2-yl, 3-dimethylaminocarbonylpyridin-2-yl, 2-methoxycarbonylthiophen-3-yl, 1-methyl-3-chloro-4-methoxycarbonylimidazolin-5-yl or methylsulfonylmethylamino.

$R^{10}$ is preferably a hydrogen atom or methyl.

$R^{11}$ is preferably methyl, methoxy or difluoromethoxy.

$R^{12}$ is preferably methoxy or difluoromethoxy.

Specific examples of the sulfonylurea herbicide used in the present invention are as follows.

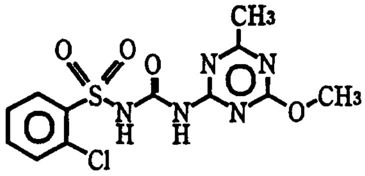

Chlorosulfuron

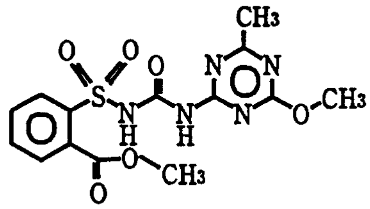

Metsulfuron-methyl

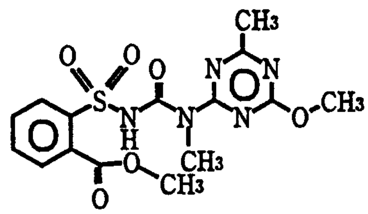

Tribenuron -methyl

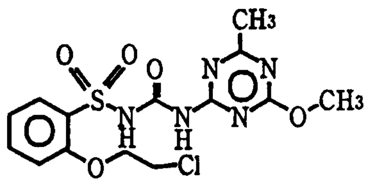

Triasulfuron

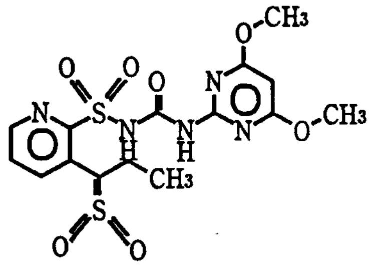

Rimsulfuron -methyl

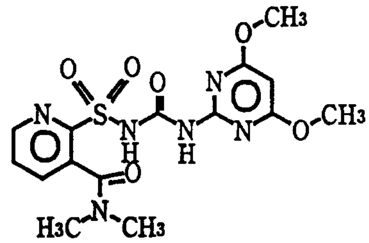

Nicosulfuron

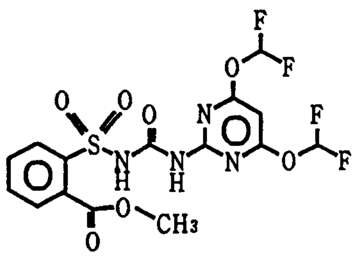

Primisulfuron-methyl

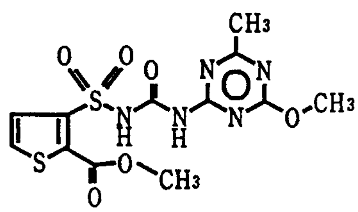

Thifensulfuron -methyl

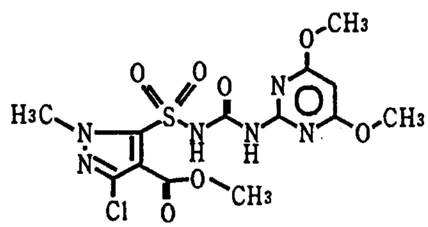

Halosulfuron-methyl

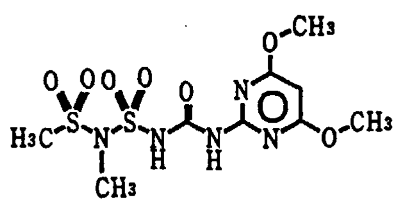

Amidosulfuron

Further, of the herbicides coming under the (b2) group, the sulfoneamide herbicide is preferably a compound of the following general formula (IX) (to be referred to as "sulfoneamide herbicide (IX)" hereinafter),

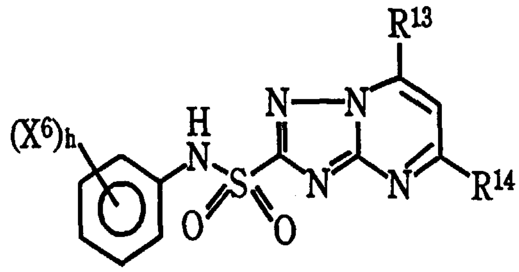

(IX)

(wherein $X^6$ is a linear or branched $C_1$-$C_6$ alkyl group or a halogen atom, h is an integer of 0 to 4, provided that when h is an integer of 2 or more, a plurality of $X^6$s may be the same as, or different from, each other, $R^{13}$ is a hydrogen atom, a linear or branched $C_1$-$C_6$ alkyl group or a linear or branched $C_1$-$C_6$ alkoxy group, and $R^{14}$ is a hydrogen atom, a linear or branched $C_1$-$C_6$ alkyl group or a linear or branched $C_1$-$C_6$ alkoxy group).

When $X^6$, $R^{13}$ or $R^{14}$ is a linear or branched $C_1$-$C_6$ alkyl group, or when $R^{13}$ or $R^{14}$ is a linear or branched $C_1$-$C_6$ alkoxy group, specific examples thereof include those explained with regard to the above general formula (VII) and are therefore omitted.

$X^6$ is preferably methyl, a chlorine atom or a fluorine atom.

h is preferably 1 or 2.

$R^{13}$ is preferably a hydrogen atom or methoxy.

$R^{14}$ is preferably methyl or methoxy.

Specific examples of the sulfoneamide herbicide (IX) used in the present invention are as follows.

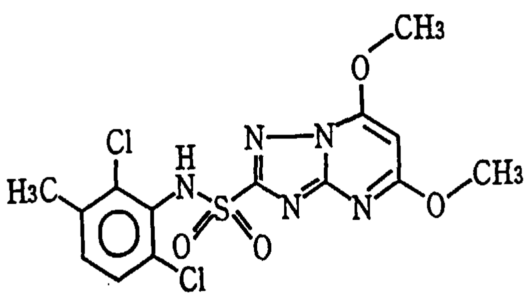

Metosulam

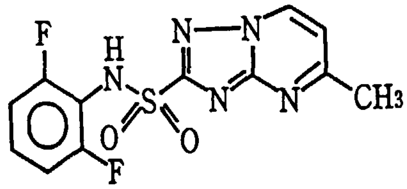

Flumethosulam

The urea herbicide, the sulfonylurea herbicide and the sulfoneamide herbicide of the (b2) group, used in the present invention, can be commercially acquired or can be produced according to known methods in the field of the concerned art.

(b3) group

Herbicides coming under the (b3) group are a dinitroaniline herbicide and a carbamate herbicide.

Of the herbicides coming under the (b3) group, the dinitroaniline herbicide is preferably a compound of the following general formula (X) (to be referred to as "dinitroaniline herbicide (X)" hereinafter),

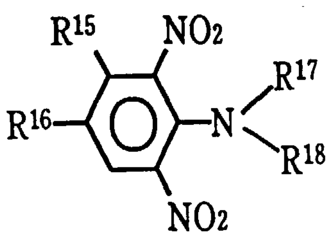

(x)

(wherein $R^{15}$ is a hydrogen atom, an amino group or a linear or branched $C_1$-$C_6$ alkyl group, $R^{16}$ is a linear or

branched $C_1$-$C_6$ alkyl group, a linear or branched $C_1$-$C_6$ alkoxy group, a linear or branched $C_1$-$C_6$ haloalkyl group or a sulfoneamide group, $R^{17}$ is a hydrogen atom, a linear or branched $C_1$-$C_6$ alkyl group, a linear or branched $C_1$-$C_6$ alkenyl group or a linear or branched $C_1$-$C_6$ alkoxy group, $R^{18}$ is a hydrogen atom, a linear or branched $C_1$-$C_6$ alkyl group, a linear or branched $C_1$-$C_6$ alkenyl group or a linear or branched $C_1$-$C_6$ alkoxy group).

When $R^{15}$, $R^{16}$, $R^{17}$ or $R^{18}$ in the above general formula (X) is a linear or branched $C_1$-$C_6$ alkyl group, specific examples thereof includes, in addition to those of the $C_1$-$C_4$ alkyl group explained with regard to $X^1$ in the already described general formula (I), n-pentyl, i-pentyl, sec-pentyl, tert-pentyl, n-hexyl, i-hexyl, sec-hexyl, tert-hexyl, cyclopentyl and cyclohexyl.

When $R^{16}$, $R^{17}$ or $R^{18}$ in the above general formula (X) is a linear or branched $C_1$-$C_6$ alkoxy group, specific examples thereof include, in addition to those of the $C_1$-$C_4$ alkoxy group explained with regard to $R^1$ in the already described general formula (I), n-pentoxy, i-pentoxy, sec-pentoxy, tert-pentoxy, n-hexoxy, i-hexoxy, sec-hexoxy, tert-hexoxy, cyclopentoxy and cyclohexoxy.

When $R^{16}$ in the above general formula (X) is a linear or branched $C_1$-$C_6$ haloalkyl group, specific examples thereof include those formed by substituting one or more halogen atoms on the linear or branched $C_1$-$C_6$ alkyl group explained with regard to the above $R^{16}$, $R^{17}$ and $R^{18}$.

When $R^{17}$ or $R^{18}$ in the above general formula (X) is a linear or branched $C_1$-$C_6$ alkenyl group, specific examples thereof include vinyl, propenyl, butenyl, pentenyl and hexenyl.

$R^{15}$ is preferably a hydrogen atom, methyl or amino.

$R^{16}$ is preferably methyl, trifluoromethyl or a sulfoneamide group.

$R^{17}$ is preferably n-propyl, n-butyl, 2-methylpropenyl or 1-ethylpropyl.

$R^{18}$ is preferably a hydrogen atom, ethyl or n-propyl.

Specific examples of the dinitroaniline herbicide (X) used in the present invention are as follows.

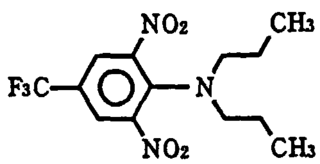
Trifluralin

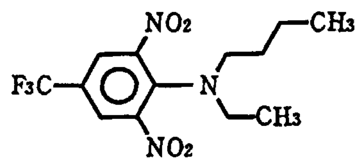
Benfluralin

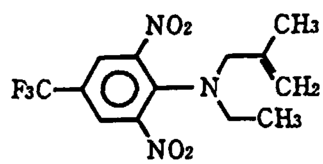
Ethalfluralin

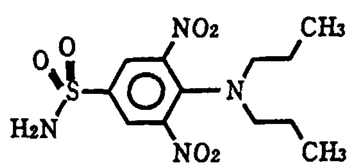
Oryzalin

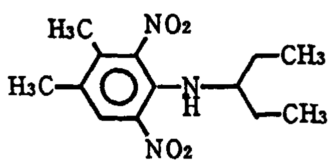
Pendimethalin

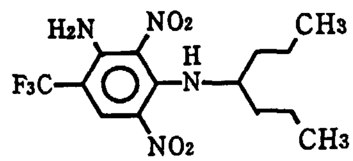
Prodiamine

Of the herbicides coming under the (b3) group, the carbamate herbicide is preferably a compound of the following general formula (XI) (to be referred to as "carbamate herbicide (XI)" hereinafter),

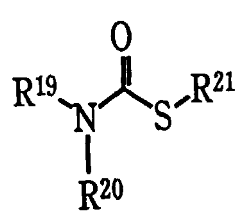
(XI)

(wherein $R^{19}$ is a hydrogen atom or a linear or branched $C_1$-$C_6$ alkyl group, $R^{20}$ is a hydrogen atom or a linear or branched $C_1$-$C_6$ alkyl group, $R^{21}$ is an optionally substituted phenyl group, $C_7$-$C_{12}$ aralkyl group or aromatic heterocyclic group, a linear or branched $C_1$-$C_6$ alkyl group, a linear or branched $C_1$-$C_6$ alkoxy group, a linear or branched $C_1$-

$C_6$ haloalkyl group or a linear or branched $C_1$-$C_6$ haloalkenyl group).

In the above general formula (XI), when $R^{19}$, $R^{20}$ or $R^{21}$ is a linear or branched $C_1$-$C_6$ alkyl group, or when $R^{21}$ is a linear or branched $C_1$-$C_6$ alkoxy group or a linear or branched $C_1$-$C_6$ haloalkyl group, specific examples thereof include those explained with regard to the above general formula (X) and are therefore omitted.

When $R^{21}$ in the above general formula (XI) is a non-substituted $C_7$-$C_{12}$ aralkyl group, specific examples thereof include benzyl.

When $R^{21}$ in the above general formula (XI) is a substituted phenyl, $C_7$-$C_{12}$ aralkyl group or aromatic heterocyclic group, specific examples of the substituent include a halogen atom, and the like.

When $R^{21}$ in the above general formula (XI) is a linear or branched $C_1$-$C_6$ haloalkenyl group, specific examples thereof include those formed by substituting one or more halogen atoms on the linear or branched $C_1$-$C_6$ alkenyl group explained with regard to $R^{17}$ and $R^{18}$ in the above general formula (X).

$R^{19}$ is preferably n-propyl or i-propyl.

$R^{20}$ is preferably n-propyl or i-propyl.

$R^{21}$ is preferably 2,3,3-trichloro-2-propenyl or benzyl.

Specific examples of the carbamate herbicide (XI) used in the present invention are as follows.

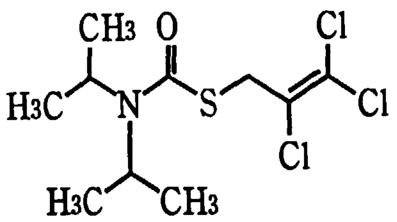

Triallate

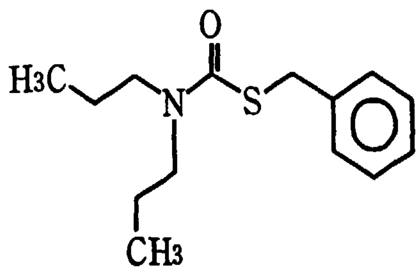

Prosulfocarb

The dinitroaniline herbicide and the carbamate herbicide of the (b3) group, used in the present invention, can be commercially acquired or can be produced according to known methods in the field of the concerned art.

In the herbicide composition of the present invention, one compound or at least two compounds may be selected from the above (b1) to (b3) groups and used as component (B).

The herbicide composition of the present invention can be used by mixing a blend of the above triazine derivative as component (A) and the component (B) (said blend being referred to as "active ingredient blend" hereinafter) with a liquid carrier such as a solvent or a solid carrier such as a mineral fine powder and preparing an obtained mixture in the form of a wettable powder, an emulsifiable concentrate, a dust or granules. A surfactant may be added for imparting emulsifiability, dispersibility or spreadability when the above preparations are formed.

The blend ratio of the triazine derivative (I) as component (A) and the component (B) are properly determined depending upon kinds of crops, kinds of weeds to be controlled as objects, conditions such as weathers and kinds of herbicides as a component (B). For example, when the component (B) is from the (b1) group, the component (A):component (B) weight ratio is preferably 100:1 to 1:500, more preferably 10:1 to 1:10. When the component (B) is a urea herbicide of the (b2) group, the component (A):component (B) weight ratio is preferably 10:1 to 1:500, more preferably 1:1 to 1:100. When the component (B) is a sulfonylurea herbicide of the (b2) group, the component (A):component (B) weight ratio is preferably 100:1 to 1:10, more preferably 100:1 to 1:1. When the component (B) is a sulfoneamide herbicide of the (b2) group, the component (A):component (B) weight ratio is preferably 10:1 to 1:100, more preferably 1:1 to 1:10. When the component (B) is from the (b3) group, the component (A):component (B) weight ratio is preferably 1:1 to 1:1,000, more preferably 1:1 to 1:100.

When the herbicide composition of the present invention is used in the form of a wettable powder, generally, 10 to 55 % by weight of the active ingredient blend, 40 to 88 % by weight of a solid carrier and 2 to 5 % by weight of a surfactant are mixed to prepare a composition, and the composition can be used as such.

When the herbicide composition of the present invention is used in the form of an emulsifiable concentrate, generally, the emulsifiable concentrate can be prepared by mixing 20 to 50 % by weight of the active ingredient blend, 35 to 75 % by weight of a solvent and 5 to 15 % by weight of a surfactant.

When the herbicide composition of the present invention is used in the form of a dust, generally, the dust can be prepared by mixing 1 to 15 % by weight of the active ingredient blend, 80 to 97 % by weight of a solid carrier and 2 to 5 % by weight of a surfactant.

Further, when the herbicide composition of the present invention is used in the form of granules, generally, the granules can be prepared by mixing 1 to 15 % by weight of the active ingredient blend, 80 to 97 % by weight of a solid carrier and 2 to 5 % by weight of a surfactant.

The above solid carrier is selected from fine mineral powders, and examples of the mineral fine powders include oxides such as diatomaceous earth and slaked lime, phosphates such as apatite, sulfates such as gypsum, and silicates such as talc, pyroferrite, clay, kaolin, bentonite, acid clay, white carbon, powdered quartz and powdered silica.

The solvent is selected from organic solvents. Specific examples of the solvent include aromatic hydrocarbons such as benzene, toluene and xylene, chlorinated hydrocarbons such as o-chlorotoluene, trichloroethane and trichloroethylene, alcohols such as cyclohexanol, amyl alcohol and ethylene glycol, ketones such as isophorone, cyclohexanone and cyclohexenylcyclohexanone, ethers such as butyl cellosolve, diethyl ether and methyl ethyl ether, esters such as isopropyl acetate, benzyl acetate and methyl phthalate, amides such as dimethylformamide, and mixtures of these.

Further, the surfactant can be selected from anionic surfactants, nonionic surfactants, cationic surfactants and amphoteric surfactants (amino acid and betaine).

Further, the herbicide composition of the present invention may contain other herbicidal component, an insecticide, a fungicide, a plant growth regulator and a fertilizer as required.

The herbicide composition of the present invention is applied to weeds or a weeds-growing field, e.g., before or after the emergence of the weeds.

The application means differ depending upon crops to be cultured and use environments. For example, it can be spraying, sprinkling, diffusing or pouring into water.

The herbicide composition of the present invention is useful, for example, for the culturing of gramineous plants such as rice, wheat, barley, corn, oats and sorghum and broad-leaved crops such as soybean, cotton, beet, sunflower and rape, and it is also useful for orchard, flower vegetables, root vegetables and leaf vegetables.

The herbicide composition of the present invention is useful for controlling weeds such as speedwell, violet, chickweed, cleavers, wild chamomile, dead nettle, poppy, blackgrass, annual bluegrass, wild oat, velvetleaf, cocklebur, morning glory, common lambsquarters, slender amaranth, jimsonweed, black nightshade, green foxtail, large crabgrass, spiny sow thistle, dandelion, shatter cane, parnyard grass, Monochoria, toothcup, false pimpernel, Elatine triandra, bulrush, umbrella plant, needle-upright-clubrush, Cyperus, serotinus, Sagitaria pygmaea and arrowhead.

As described above, the herbicide composition of the present invention can effectively control a broad range of weeds, broad-leaved weeds and grass weeds in particular, at a low dosage without causing phytotoxicity on crops such as wheat, barley, etc., or lawn, and it can therefore serve to attain further improvements in productivity of agricultural crops and labor saving.

The present invention will be specifically explained with reference to Examples hereinafter, while the present invention shall not be limited by these Examples.

(Referential Example 1) Preparation of Compound A-4 (triazine derivative (I)):

To 5.00 g (16.7 mmol) of 2-(3',5'-dimethylphenoxy)isopropylbiguanide hydrochloride synthesized according to the method described in JP-A-63-264465 was added 9.66 g (50.1 mmol) of a solution of 28 % by weight of sodium methoxide in methanol with stirring at room temperature, and further, 5.01 g (50.1 mmol) of methyl cyclopropylcarboxylate was dropwise added. The reaction mixture was refluxed under heat for 7 hours, a precipitate was separated by filtration, and a filtrate was concentrated with an evaporator. To an obtained residue were added 50 ml of ethyl acetate and 50 ml of water for phase separation. An ethyl acetate layer was washed with water and then dried over anhydrous sodium sulfate, and the solvent was distilled off with an evaporator. A residue was purified by silica gel column chromatography (developing solvent: hexane/ethyl acetate = volume ratio 1/1), to give 4.18 g (yield 80 %) of 2-amino-4-cyclopropyl-6-[2-(3',5'-dimethylphenoxy)-1-methyl-ethylamino]-1,3,5-triazine (Compound A-4) as an end product. The already described Table 8 shows NMR and IR data of the obtained triazine compound.

(Referential Example 2) Preparation of Compound A-5 (triazine derivative (I)):

To 5.00 g (19.9 mmol) of 2-(3'-fluorophenoxy)isopropylbiguanide hydrochloride (salt of alkylbiguanide) synthesized according to the method described in JP-A-63-264465 was added 11.5 g (59.7 mmol) of a solution of 28 % by weight of sodium methoxide as a base in methanol with stirring at room temperature. Further, 6.93 g (59.7 mmol) of methyl trimethylacetate was dropwise added. The reaction mixture was refluxed under heat for 7 hours, a precipitate was separated by filtration, and a filtrate was concentrated with an evaporator. To an obtained residue were added 50 ml of ethyl acetate and 50 ml of water for phase separation. An ethyl acetate layer was washed with water and then dried over anhydrous sodium sulfate, and the solvent was distilled off with an evaporator. A residue was purified by silica gel column chromatography (developing solvent: hexane/ethyl acetate = volume ratio 1/1), to give 4.77 g (yield 85 %) of 2-amino-4-t-butyl-6-[2-(3'-fluorophenoxy)-1-methyl-ethylamino]-1,3,5-triazine (Compound A-5) as an end product. The already described Table 8 shows NMR and IR data of the obtained triazine compound.

Compounds A-1 to A-3 and A-6 to A-9 were prepared according to Referential Examples 1 and 2.

(Preparation Examples)

Preparation Examples of the herbicide composition of the present invention will be described below.

In Preparation Examples 1 to 16, Compounds A-1 to A-9 are triazine derivatives shown in the already described Tables 1 to 3, and Compounds B-(b1)-1 to B-(b1)-7, B-(b2)-1 to B-(b2)-7 and B-(b3)-1 to B)b3)-3 are compounds shown in Tables 10, 11 and 12.

Table 10

| Compound No. | Structural Formula | Compound Name | General Name |
|---|---|---|---|
| B-(b1)-1 | 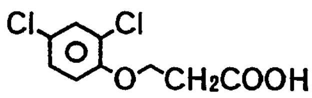 | 2,4-dichloro-phenoxyacetic acid | 2,4-D |
| B-(b1)-2 | 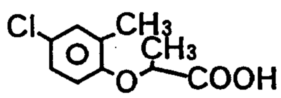 | 2-(4-chloro-2-methylphenoxy)-propionic cid | Mecoprop (MCPP) |
| B-(b1)-3 | 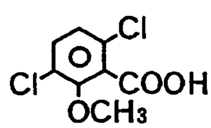 | 3,6-dichloro-2-methoxy-benzoic acid | Dicamba |
| B-(b1)-4 | 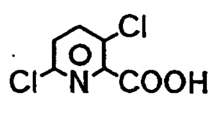 | 3,6-dichloro-picolinic acid | clopyralid |
| B-(b1)-5 | 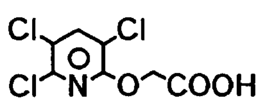 | [(3,5,6-tirchloro-2-pyridyl)oxy]-acetic acid | triclopyr |
| B-(b1)-6 | 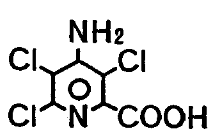 | 4-amino-3,5,6-trichloro-picolinic acid | picloram |
| B-(b1)-7 | 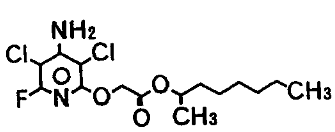 | 1'-methylheptyl-[(4-amino-3,5-di-chloro-6-fluoro-2-pyridyloxy)acetate | fluroxypyr |

Table 11

| Compound No. | Structural Formula | Compound Name | General Name |
|---|---|---|---|
| B-(b2)-1 | 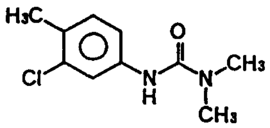 | 3-(3-chloro-p-tolyl)-1,1-dimethylurea | chlorotoluron |
| B-(b2)-2 | 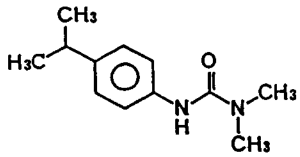 | 3-(4-isopropylphenyl)-1,1-dimethylurea | isoproturon |
| B-(b2)-3 | 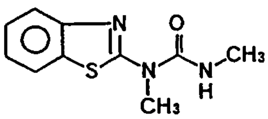 | 1-(1,3-benzothiazol-2-yl)-1,3-dimethylurea | methabenzthiazuron |
| B-(b2)-4 | 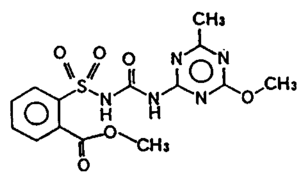 | Methyl-2-[3-(4-methoxy-6-methyl-1,3,5-triazin-2-yl)ureidsulfonyl]-benzoate | metsulfuron-methyl |
| B-(b2)-5 | 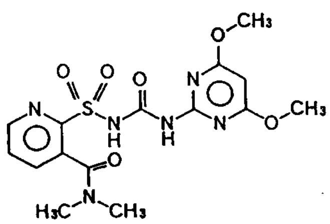 | 2-(4,6-dimethoxypyrimidin-2-yl-carbamoylsulfamoyl)-N,N-dimethyl-nicotineamide | nicosulfuron |
| B-(b2)-6 | 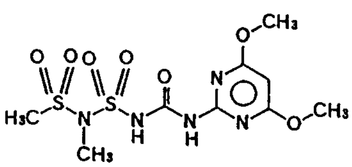 | 1-(4,6-dimethoxypyrimidin-2-yl)-3-methyl(methyl)-sulfamoylurea | amidosulfuron |
| B-(b2)-7 | 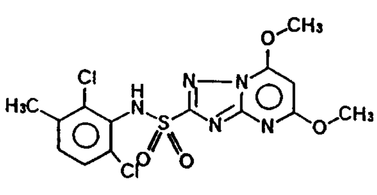 | 2',6'-dichloro-5,7-dimethoxy-3'-methyl[1,2,4]-triazolo[1,5-α]pyrimidine-2-sulfonanilide | Metosulam |

Table 12

| Compound No. | Structural Formula | Compound Name | General Name |
|---|---|---|---|
| B-(b3)-1 | 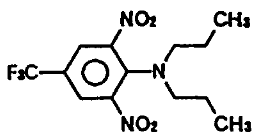 | α,α,α-trifluoro-2,6-dinitro-N,N-dipropyl-p-toluidine | triflu-ralin |
| B-(b3)-2 | 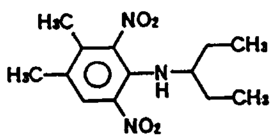 | N-(1-ethylpropyl)-2,6-dinitro-3,4-xylidine | pendi-methalin |
| B-(b3)-3 | 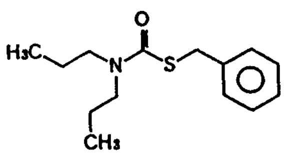 | S-benzyldipropyl-thiocarbamate | prosulfo-carb |

In Preparation Examples, part stands for part by weight.

Preparation Example 1: Wettable powder

| | |
|---|---|
| Compound A-2 | 5 parts |
| Compound B-(b1)-7 | 5 parts |
| Diatomaceous earth | 72 parts |
| White carbon | 15 parts |
| Sodium alkylbenzenesulfonate | 2 parts |
| Sodium lignin sulfonate | 1 part |

The above components were uniformly mixed and pulverzied to obtain a wettable powder.

Preparation Example 2: Flowable preparation

| | |
|---|---|
| Compound A-2 | 5 parts |
| Compound B-(b1)-7 | 5 parts |
| Methyl cellulose | 1 part |
| Colloidal silica | 3 parts |

(continued)

| | |
|---|---|
| Sodium lignin sulfonate | 2 parts |
| Polyoxyethylene nonylphenyl ether | 5 parts |
| Water | 79 parts |

The above components were uniformly mixed and dispersed, and the resultant slurry-like mixture was wet-pulverized to obtain a flowable preparation.

Preparation Example 3: Emulsifiable concentrate

| | |
|---|---|
| Compound A-2 | 5 parts |
| Compound B-(b1)-7 | 5 parts |
| Xylene | 50 parts |
| Dimethylformamide | 20 parts |
| Sorpol 2806B (supplied by Toho Chemical Co., Ltd.) | 20 parts |

The above components were uniformly dissolved and mixed to obtain an emulsifiable concentrate.

Preparation Example 4: Wettable powder

97 Parts by weight of talc (trade name: Zeaklite, supplied by Zeaklite Industry) as a carrier, 1.5 parts by weight of alkylarylsulfonic acid salt (trade name: Neoplex, supplied by Kao-Atlas K.K.) as a surfactant and 1.5 parts by weight of a nonionic and anionic surfactant (trade name: Sorpol 800A, supplied by Toho Chemical Co., Ltd.) were uniformly pulverized and mixed to obtain a carrier for a wettable powder.

90 Parts by weight of the above carrier for a wettable powder and 10 parts by weight of one of the triazine derivatives shown in the already described Table 1 to 3 (Compounds A-1 to A-9) were uniformly pulverized and mixed to obtain wettable powders (to be referred to as "wettable powders A-1 to A-9" hereinafter). Further, 90 parts of the above carrier for a wettable powder and one of the herbicide compounds shown in the above Table 10 (Compounds B-(b1)-1 to B-(b1)-7) were uniformly pulverized and mixed to obtain wettable powders (to be referred to as "wettable powder B-(b1)-1 to B-(b1)-7" hereinafter).

The above-obtained wettable powders A-1 to A-9 (to be generally referred to as "wettable powders A" hereinafter) and the above-obtained wettable powders B-(b1)-1 to B-(b1)-7 (to be generally referred to as "wettable powders B-(b1)" hereinafter) were mixed in weight ratios corresponding to dosages shown in Tables 13 to 17, to obtain wettable powders containing Compounds A-1 to A-9 and Compounds B-(b1)-1 to B-(b1)-7 in various combinations, as herbicide compositions of the present invention.

Preparation Example 5: Wettable powder

| | |
|---|---|
| Compound A-2 | 5 parts |
| Compound B-(b2)-2 | 15 parts |
| Diatomaceous earth | 62 parts |
| White carbon | 15 parts |
| Sodium alkylbenzenesulfonate | 2 parts |
| Sodium lignin sulfonate | 1 part |

The above components were uniformly mixed and pulverzied to obtain a wettable powder.

Preparation Example 6: Emulsifiable concentrate

| | |
|---|---|
| Compound A-2 | 10 parts |
| Compound B-(b2)-2 | 30 parts |
| Xylene | 20 parts |
| Dimethylformamide | 20 parts |
| Sorpol 2806B (supplied by Toho Chemical Co., Ltd.) | 20 parts |

The above components were uniformly dissolved and mixed to obtain an emulsifiable concentrate.

Preparation Example 7: Flowable preparation

| | |
|---|---|
| Compound A-2 | 10 parts |
| Compound B-(b2)-2 | 15 parts |
| Methyl cellulose | 0.5 part |
| Colloidal silica | 1.5 parts |
| Sodium lignin sulfonate | 1 part |
| Polyoxyethylene nonylphenyl ether | 2 parts |
| Water | 70 parts |

The above components were uniformly mixed and dispersed, and the resultant slurry-like mixture was wet-pulverized to obtain a flowable preparation.

Preparation Example 8: Wettable powder

97 Parts by weight of talc (trade name: Zeaklite, supplied by Zeaklite Industry) as a carrier, 1.5 parts by weight of alkylarylsulfonic acid salt (trade name: Neoplex, supplied by Kao-Atlas K.K.) as a surfactant and 1.5 parts by weight of a nonionic and anionic surfactant (trade name: Sorpol 800A, supplied by Toho Chemical Co., Ltd.) were uniformly pulverized and mixed to obtain a carrier for a wettable powder.

90 Parts by weight of the above carrier for a wettable powder and 10 parts by weight of one of the triazine derivatives shown in the already described Table 1 to 3 (Compounds A-1 to A-9) were uniformly pulverized and mixed to obtain wettable powders (to be referred to as "wettable powders A-1 to A-9" hereinafter). Further, 90 parts of the above carrier for a wettable powder and one of the herbicide compounds shown in the above Table 11 (Compounds B-(b2)-1 to B-(b2)-7) were uniformly pulverized and mixed to obtain wettable powders (to be referred to as "wettable powder B-(b2)-1 to B-(b2)-7" hereinafter).

The above-obtained wettable powders A-1 to A-9 (to be generally referred to as "wettable powders A" hereinafter) and the above-obtained wettable powders B-(b2)-1 to B-(b2)-7 (to be generally referred to as "wettable powders B-(b2)" hereinafter) were mixed in weight ratios corresponding to dosages shown in Tables 19 to 22, to obtain wettable powders containing Compounds A-1 to A-9 and Compounds B-(b2)-1 to B-(b2)-7 in various combinations, as herbicide compositions of the present invention.

Preparation Example 9: Wettable powder

| | |
|---|---|
| Compound A-2 | 5 parts |

(continued)

| | |
|---|---|
| Compound B-(b3)-2 | 15 parts |
| Diatomaceous earth | 62 parts |
| White carbon | 15 parts |
| Sodium alkylbenzenesulfonate | 2 parts |
| Sodium lignin sulfonate | 1 part |

The above components were uniformly mixed and pulverzied to obtain a wettable powder.

Preparation Example 10: Emulsifiable concentrate

| | |
|---|---|
| Compound A-2 | 10 parts |
| Compound B-(b3)-2 | 30 parts |
| Xylene | 20 parts |
| Dimethylformamide | 20 parts |
| Sorpol 2806B (supplied by Toho Chemical Co., Ltd) | 20 parts |

The above components were uniformly dissolved and mixed to obtain an emulsifiable concentrate.

Preparation Example 11: Flowable preparation

| | |
|---|---|
| Compound A-2 | 10 parts |
| Compound B-(b3)-2 | 15 parts |
| Methyl cellulose | 0.5 part |
| Colloidal silica | 1.5 parts |
| Sodium lignin sulfonate | 1 part |
| Polyoxyethylene nonylphenyl ether | 2 parts |
| Water | 70 parts |

The above components were uniformly mixed and dispersed, and the resultant slurry-like mixture was wet-pulverized to obtain a flowable preparation.

Preparation Example 12: Wettable powder

97 Parts by weight of talc (trade name: Zeaklite, supplied by Zeaklite Industry) as a carrier, 1.5 parts by weight of alkylarylsulfonic acid salt (trade name: Neoplex, supplied by Kao-Atlas K.K.) as a surfactant and 1.5 parts by weight of a nonionic and anionic surfactant (trade name: Sorpol 800A, supplied by Toho Chemical Co., Ltd.) were uniformly pulverized and mixed to obtain a carrier for a wettable powder.

90 Parts by weight of the above carrier for a wettable powder and 10 parts by weight of one of the triazine derivatives shown in the already described Table 1 to 3 (Compounds A-1 to A-9) were uniformly pulverized and mixed to obtain wettable powders (to be referred to as "wettable powders A-1 to A-9" hereinafter). Further, 90 parts of the above carrier for a wettable powder and one of the herbicide compounds shown in the above Table 12 (Compounds B-(b3)-1 to B-(b2)-3) were uniformly pulverized and mixed to obtain wettable powders (to be referred to as "wettable powder B-(b3)-1 to B-(b3)-3" hereinafter).

The above-obtained wettable powders A-1 to A-9 (to be generally referred to as "wettable powders A" hereinafter) and the above-obtained wettable powders B-(b3)-1 to B-(b3)-3 (to be generally referred to as "wettable powders B-(b3)" hereinafter) were mixed in weight ratios corresponding to dosages shown in Tables 19 to 22, to obtain wettable powders containing Compounds A-1 to A-9 and Compounds B-(b3)-1 to B-(b3)-3 in various combinations, as herbicide compositions of the present invention.

(Herbicidal Test Examples)

Test Example 1:

(1) Upland soil was filled in 1/2,000-are Wagner pots filled with upland soil, and seeds of barley, wheat and oats as crops and seeds of cleavers, persian speedwell and violet as weeds were sown, covered with upland soil and then grown in a greenhouse.

The wettable powders prepared in the above Preparation Examples 4 and 8 as herbicide compositions of the present invention were suspended in water to prepare herbicide suspensions having concentrations shown in Tables 13 to 17 and 19 to 22 to be described later, and at the stage of 4 or 5 leaves of the above weeds, the suspensions were uniformly sprayed onto entire soil surfaces of the pots at a rate of 500 liters/hectare each.

Then, the weeds and the crops were grown in the greenhouse, and on the 30th day after the treatment, the herbicide compositions were evaluated for phytotoxicity to the crops and herbicidal efficacy on the basis of the following ratings. Tables 13 to 17 and 19 to 22 show the results.

(2) Upland soil was filled in 1/2,000-are Wagner pots filled with upland soil, and seeds of barley, wheat and oats as crops and seeds of cleavers, creeping speedwell and violet as weeds were sown, covered with upland soil and then grown in a greenhouse.

The wettable powder prepared in the above Preparation Example 12 as a herbicide composition of the present invention was suspended in water to prepare herbicide suspensions having concentrations shown in the following Tables 24 and 25, and 3 days after the sowing, the suspensions were uniformly sprayed onto entire soil surfaces of the pots at a rate of 500 liters/hectare each.

Then, the weeds and the crops were grown in the greenhouse, and on the 30th day after the treatment, the herbicide composition was evaluated for phytotoxicity to the crops and herbicidal efficacy on the basis of the following ratings. Tables 24 and 25 show the results.

| Phytotoxicity | |
|---|---|
| 0 | Not found |
| 1 | Almost no phytotoxicity found |
| 2 | Found to some extent |
| 3 | Found |
| 4 | Found clearly |
| 5 | Mostly withered |

| Herbicidal efficacy | Weed control ratio (%) |
|---|---|
| 0 | Less than 5 % |
| 1 | at least 5 % to less than 20 % |
| 2 | at least 20 % to less than 40 % |
| 3 | at least 40 % to less than 70 % |

(continued)

| Herbicidal efficacy | Weed control ratio (%) |
|---|---|
| 4 | at least 70 % to less than 90 % |
| 5 | at least 90 % |

The above-ground part of the weeds were measured for a fresh weight, and the weed control ratio was calculated on the basis of the following equation.

Weed control ratio (%) = (1 - fresh weight of treated plot/fresh weight of non-treated plot) x 100

For comparison, phytotoxicity and herbicidal efficacy were studied by the same evaluation method as above except that the wettable powders A prepared in the above Preparation Examples 4, 8 and 12 and the wettable powders B-(b1), B-(b2) and B-(b3) were used independently each in place of the wettable powders as herbicide compositions of the present invention. The following Tables 18, 23 and 26 show the results.

Table 13

| Triazine derivative | | Compound B-(b1) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-1 | 100<br>50 | B-(b1)-1 | 50<br>25 | 5<br>5 | 5<br>5 | 5<br>5 | 0<br>0 | 0<br>0 | 0<br>0 |
| | 100<br>50 | B-(b1)-2 | 200<br>100 | 5<br>5 | 5<br>5 | 5<br>5 | 0<br>0 | 0<br>0 | 0<br>0 |
| | 100<br>50 | B-(b1)-3 | 50<br>25 | 5<br>5 | 5<br>5 | 5<br>5 | 0<br>0 | 0<br>0 | 0<br>0 |
| | 100<br>50 | B-(b1)-4 | 200<br>100 | 5<br>5 | 5<br>5 | 5<br>5 | 0<br>0 | 0<br>0 | 0<br>0 |
| | 100<br>50 | B-(b1)-5 | 100<br>50 | 5<br>5 | 5<br>5 | 5<br>5 | 0<br>0 | 0<br>0 | 0<br>0 |
| | 100<br>50 | B-(b1)-6 | 200<br>100 | 5<br>5 | 5<br>5 | 5<br>5 | 0<br>0 | 0<br>0 | 0<br>0 |
| | 100<br>50 | B-(b1)-7 | 50<br>25 | 5<br>5 | 5<br>5 | 5<br>5 | 0<br>0 | 0<br>0 | 0<br>0 |
| A-2 | 100<br>50 | B-(b1)-1 | 50<br>25 | 5<br>5 | 5<br>5 | 5<br>5 | 0<br>0 | 0<br>0 | 0<br>0 |
| | 100<br>50 | B-(b1)-2 | 200<br>100 | 5<br>5 | 5<br>5 | 5<br>5 | 0<br>0 | 0<br>0 | 0<br>0 |
| | 100<br>50 | B-(b1)-3 | 50<br>25 | 5<br>5 | 5<br>5 | 5<br>5 | 0<br>0 | 0<br>0 | 0<br>0 |
| | 100<br>50 | B-(b1)-4 | 200<br>100 | 5<br>5 | 5<br>5 | 5<br>5 | 0<br>0 | 0<br>0 | 0<br>0 |
| | 100<br>50 | B-(b1)-5 | 100<br>50 | 5<br>5 | 5<br>5 | 5<br>5 | 0<br>0 | 0<br>0 | 0<br>0 |
| | 100<br>50 | B-(b1)-6 | 200<br>100 | 5<br>5 | 5<br>5 | 5<br>5 | 0<br>0 | 0<br>0 | 0<br>0 |
| | 100<br>50 | B-(b1)-7 | 50<br>25 | 5<br>5 | 5<br>5 | 5<br>5 | 0<br>0 | 0<br>0 | 0<br>0 |

AA: Cleavers, BB: Creeping speedwell, CC: Violet, DD: Barley, EE: Wheat, FF: Oats

Table 14

| Triazine derivative | | Compound B-(b1) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-3 | 100 | B-(b1)-1 | 50 | 5 | 5 | 5 | 0 | 0 | 0 |
| | 50 | | 25 | 5 | 5 | 5 | 0 | 0 | 0 |
| | 100 | B-(b1)-2 | 200 | 5 | 5 | 5 | 0 | 0 | 0 |
| | 50 | | 100 | 5 | 5 | 5 | 0 | 0 | 0 |
| | 100 | B-(b1)-3 | 50 | 5 | 5 | 5 | 0 | 0 | 0 |
| | 50 | | 25 | 5 | 5 | 5 | 0 | 0 | 0 |
| | 100 | B-(b1)-4 | 200 | 5 | 5 | 5 | 0 | 0 | 0 |
| | 50 | | 100 | 5 | 5 | 5 | 0 | 0 | 0 |
| | 100 | B-(b1)-5 | 100 | 5 | 5 | 5 | 0 | 0 | 0 |
| | 50 | | 50 | 5 | 5 | 5 | 0 | 0 | 0 |
| | 100 | B-(b1)-6 | 200 | 5 | 5 | 5 | 0 | 0 | 0 |
| | 50 | | 100 | 5 | 5 | 5 | 0 | 0 | 0 |
| | 100 | B-(b1)-7 | 50 | 5 | 5 | 5 | 0 | 0 | 0 |
| | 50 | | 25 | 5 | 5 | 5 | 0 | 0 | 0 |
| A-4 | 100 | B-(b1)-1 | 50 | 5 | 5 | 5 | 0 | 0 | 0 |
| | 50 | | 25 | 5 | 5 | 5 | 0 | 0 | 0 |
| | 100 | B-(b1)-2 | 200 | 5 | 5 | 5 | 0 | 0 | 0 |
| | 50 | | 100 | 5 | 5 | 5 | 0 | 0 | 0 |
| | 100 | B-(b1)-3 | 50 | 5 | 5 | 5 | 0 | 0 | 0 |
| | 50 | | 25 | 5 | 5 | 5 | 0 | 0 | 0 |
| | 100 | B-(b1)-4 | 200 | 5 | 5 | 5 | 0 | 0 | 0 |
| | 50 | | 100 | 5 | 5 | 5 | 0 | 0 | 0 |
| | 100 | B-(b1)-5 | 100 | 5 | 5 | 5 | 0 | 0 | 0 |
| | 50 | | 50 | 5 | 5 | 5 | 0 | 0 | 0 |
| | 100 | B-(b1)-6 | 200 | 5 | 5 | 5 | 0 | 0 | 0 |
| | 50 | | 100 | 5 | 5 | 5 | 0 | 0 | 0 |
| | 100 | B-(b1)-7 | 50 | 5 | 5 | 5 | 0 | 0 | 0 |
| | 50 | | 25 | 5 | 5 | 5 | 0 | 0 | 0 |

AA: Cleavers, BB: Creeping speedwell, CC: Violet, DD: Barley, EE: Wheat, FF: Oats

Table 15

| Triazine derivative | | Compound B-(b1) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-5 | 100<br>50 | B-(b1)-1 | 50<br>25 | 5<br>5 | 5<br>5 | 5<br>5 | 0<br>0 | 0<br>0 | 0<br>0 |
| | 100<br>50 | B-(b1)-2 | 200<br>100 | 5<br>5 | 5<br>5 | 5<br>5 | 0<br>0 | 0<br>0 | 0<br>0 |
| | 100<br>50 | B-(b1)-3 | 50<br>25 | 5<br>5 | 5<br>5 | 5<br>5 | 0<br>0 | 0<br>0 | 0<br>0 |
| | 100<br>50 | B-(b1)-4 | 200<br>100 | 5<br>5 | 5<br>5 | 5<br>5 | 0<br>0 | 0<br>0 | 0<br>0 |
| | 100<br>50 | B-(b1)-5 | 100<br>50 | 5<br>5 | 5<br>5 | 5<br>5 | 0<br>0 | 0<br>0 | 0<br>0 |
| | 100<br>50 | B-(b1)-6 | 200<br>100 | 5<br>5 | 5<br>5 | 5<br>5 | 0<br>0 | 0<br>0 | 0<br>0 |
| | 100<br>50 | B-(b1)-7 | 50<br>25 | 5<br>5 | 5<br>5 | 5<br>5 | 0<br>0 | 0<br>0 | 0<br>0 |
| A-6 | 100<br>50 | B-(b1)-1 | 50<br>25 | 5<br>5 | 5<br>5 | 5<br>5 | 0<br>0 | 0<br>0 | 0<br>0 |
| | 100<br>50 | B-(b1)-2 | 200<br>100 | 5<br>5 | 5<br>5 | 5<br>5 | 0<br>0 | 0<br>0 | 0<br>0 |
| | 100<br>50 | B-(b1)-3 | 50<br>25 | 5<br>5 | 5<br>5 | 5<br>5 | 0<br>0 | 0<br>0 | 0<br>0 |
| | 100<br>50 | B-(b1)-4 | 200<br>100 | 5<br>5 | 5<br>5 | 5<br>5 | 0<br>0 | 0<br>0 | 0<br>0 |
| | 100<br>50 | B-(b1)-5 | 100<br>50 | 5<br>5 | 5<br>5 | 5<br>5 | 0<br>0 | 0<br>0 | 0<br>0 |
| | 100<br>50 | B-(b1)-6 | 200<br>100 | 5<br>5 | 5<br>5 | 5<br>5 | 0<br>0 | 0<br>0 | 0<br>0 |
| | 100<br>50 | B-(b1)-7 | 50<br>25 | 5<br>5 | 5<br>5 | 5<br>5 | 0<br>0 | 0<br>0 | 0<br>0 |

AA: Cleavers, BB: Creeping speedwell, CC: Violet, DD: Barley, EE: Wheat, FF: Oats

Table 16

| Triazine derivative | | Compound B-(b1) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-7 | 100<br>50 | B-(b1)-1 | 50<br>25 | 5<br>5 | 5<br>5 | 5<br>5 | 0<br>0 | 0<br>0 | 0<br>0 |
| | 100<br>50 | B-(b1)-2 | 200<br>100 | 5<br>5 | 5<br>5 | 5<br>5 | 0<br>0 | 0<br>0 | 0<br>0 |
| | 100<br>50 | B-(b1)-3 | 50<br>25 | 5<br>5 | 5<br>5 | 5<br>5 | 0<br>0 | 0<br>0 | 0<br>0 |
| | 100<br>50 | B-(b1)-4 | 200<br>100 | 5<br>5 | 5<br>5 | 5<br>5 | 0<br>0 | 0<br>0 | 0<br>0 |
| | 100<br>50 | B-(b1)-5 | 100<br>50 | 5<br>5 | 5<br>5 | 5<br>5 | 0<br>0 | 0<br>0 | 0<br>0 |
| | 100<br>50 | B-(b1)-6 | 200<br>100 | 5<br>5 | 5<br>5 | 5<br>5 | 0<br>0 | 0<br>0 | 0<br>0 |
| | 100<br>50 | B-(b1)-7 | 50<br>25 | 5<br>5 | 5<br>5 | 5<br>5 | 0<br>0 | 0<br>0 | 0<br>0 |
| A-8 | 100<br>50 | B-(b1)-1 | 50<br>25 | 5<br>5 | 5<br>5 | 5<br>5 | 0<br>0 | 0<br>0 | 0<br>0 |
| | 100<br>50 | B-(b1)-2 | 200<br>100 | 5<br>5 | 5<br>5 | 5<br>5 | 0<br>0 | 0<br>0 | 0<br>0 |
| | 100<br>50 | B-(b1)-3 | 50<br>25 | 5<br>5 | 5<br>5 | 5<br>5 | 0<br>0 | 0<br>0 | 0<br>0 |
| | 100<br>50 | B-(b1)-4 | 200<br>100 | 5<br>5 | 5<br>5 | 5<br>5 | 0<br>0 | 0<br>0 | 0<br>0 |
| | 100<br>50 | B-(b1)-5 | 100<br>50 | 5<br>5 | 5<br>5 | 5<br>5 | 0<br>0 | 0<br>0 | 0<br>0 |
| | 100<br>50 | B-(b1)-6 | 200<br>100 | 5<br>5 | 5<br>5 | 5<br>5 | 0<br>0 | 0<br>0 | 0<br>0 |
| | 100<br>50 | B-(b1)-7 | 50<br>25 | 5<br>5 | 5<br>5 | 5<br>5 | 0<br>0 | 0<br>0 | 0<br>0 |

AA: Cleavers, BB: Creeping speedwell, CC: Violet,
DD: Barley, EE: Wheat, FF: Oats

Table 17

| Triazine derivative | | Compound B-(b1) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-9 | 100<br>50 | B-(b1)-1 | 50<br>25 | 5<br>5 | 5<br>5 | 5<br>5 | 0<br>0 | 0<br>0 | 0<br>0 |
| | 100<br>50 | B-(b1)-2 | 200<br>100 | 5<br>5 | 5<br>5 | 5<br>5 | 0<br>0 | 0<br>0 | 0<br>0 |
| | 100<br>50 | B-(b1)-3 | 50<br>25 | 5<br>5 | 5<br>5 | 5<br>5 | 0<br>0 | 0<br>0 | 0<br>0 |
| | 100<br>50 | B-(b1)-4 | 200<br>100 | 5<br>5 | 5<br>5 | 5<br>5 | 0<br>0 | 0<br>0 | 0<br>0 |
| | 100<br>50 | B-(b1)-5 | 100<br>50 | 5<br>5 | 5<br>5 | 5<br>5 | 0<br>0 | 0<br>0 | 0<br>0 |
| | 100<br>50 | B-(b1)-6 | 200<br>100 | 5<br>5 | 5<br>5 | 5<br>5 | 0<br>0 | 0<br>0 | 0<br>0 |
| | 100<br>50 | B-(b1)-7 | 50<br>25 | 5<br>5 | 5<br>5 | 5<br>5 | 0<br>0 | 0<br>0 | 0<br>0 |

AA: Cleavers, BB: Creeping speedwell, CC: Violet,
DD: Barley, EE: Wheat, FF: Oats

Table 18

| Active ingredient | | Dosage (g/ha) | Herbicidal efficacy | | | Phytotoxicity | | |
|---|---|---|---|---|---|---|---|---|
| | | | AA | BB | CC | DD | EE | FF |
| Triazine Derivative | A-1 | 100 | 2 | 5 | 5 | 0 | 0 | 0 |
| | | 50 | 1 | 3 | 4 | 0 | 0 | 0 |
| | A-2 | 100 | 3 | 5 | 5 | 0 | 0 | 0 |
| | | 50 | 2 | 4 | 4 | 0 | 0 | 0 |
| | A-3 | 100 | 3 | 5 | 4 | 0 | 0 | 0 |
| | | 50 | 1 | 3 | 3 | 0 | 0 | 0 |
| | A-4 | 100 | 3 | 4 | 4 | 0 | 0 | 0 |
| | | 50 | 1 | 2 | 3 | 0 | 0 | 0 |
| | A-5 | 100 | 2 | 5 | 5 | 0 | 0 | 0 |
| | | 50 | 2 | 3 | 4 | 0 | 0 | 0 |
| | A-6 | 100 | 3 | 5 | 5 | 0 | 0 | 0 |
| | | 50 | 2 | 4 | 4 | 0 | 0 | 0 |
| | A-7 | 100 | 3 | 5 | 4 | 0 | 0 | 0 |
| | | 50 | 1 | 3 | 4 | 0 | 0 | 0 |
| | A-8 | 100 | 2 | 4 | 4 | 0 | 0 | 0 |
| | | 50 | 1 | 3 | 2 | 0 | 0 | 0 |
| | A-9 | 100 | 2 | 4 | 4 | 0 | 0 | 0 |
| | | 50 | 1 | 4 | 2 | 0 | 0 | 0 |
| Compound B-(b1) | B-(b1)-1 | 50 | 3 | 3 | 2 | 0 | 0 | 0 |
| | | 25 | 2 | 2 | 1 | 0 | 0 | 0 |
| | B-(b1)-2 | 200 | 3 | 2 | 3 | 0 | 0 | 0 |
| | | 100 | 1 | 2 | 1 | 0 | 0 | 0 |
| | B-(b1)-3 | 50 | 3 | 3 | 3 | 0 | 0 | 0 |
| | | 25 | 2 | 1 | 2 | 0 | 0 | 0 |
| | B-(b1)-4 | 200 | 3 | 3 | 2 | 0 | 0 | 0 |
| | | 100 | 2 | 1 | 1 | 0 | 0 | 0 |
| | B-(b1)-5 | 100 | 2 | 3 | 2 | 0 | 0 | 0 |
| | | 50 | 1 | 2 | 1 | 0 | 0 | 0 |
| | B-(b1)-6 | 200 | 3 | 2 | 2 | 0 | 0 | 0 |
| | | 100 | 1 | 1 | 1 | 0 | 0 | 0 |
| | B-(b1)-7 | 50 | 3 | 2 | 2 | 0 | 0 | 0 |
| | | 25 | 1 | 1 | 1 | 0 | 0 | 0 |

AA: Cleavers, BB: Creeping speedwell, CC: Violet,
DD: Barley, EE: Wheat, FF: Oats

Table 19

| Triazine derivative | | Compound B-(b2) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-1 | 100 | B-(b2)-1 | 2,000 | 5 | 5 | 5 | 0 | 0 | 0 |
| | 50 | | 1,500 | 5 | 5 | 5 | 0 | 0 | 0 |
| | 100 | B-(b2)-2 | 1,500 | 5 | 5 | 5 | 0 | 0 | 0 |
| | 50 | | 1,000 | 5 | 5 | 5 | 0 | 0 | 0 |
| | 100 | B-(b2)-3 | 2,000 | 5 | 5 | 5 | 0 | 0 | 0 |
| | 50 | | 1,500 | 5 | 5 | 5 | 0 | 0 | 0 |
| | 100 | B-(b2)-4 | 10 | 5 | 5 | 5 | 0 | 0 | 0 |
| | 50 | | 5 | 5 | 5 | 5 | 0 | 0 | 0 |
| | 100 | B-(b2)-5 | 50 | 5 | 5 | 5 | 0 | 0 | 0 |
| | 50 | | 25 | 5 | 5 | 5 | 0 | 0 | 0 |
| | 100 | B-(b2)-6 | 20 | 5 | 5 | 5 | 0 | 0 | 0 |
| | 50 | | 10 | 5 | 5 | 5 | 0 | 0 | 0 |
| | 100 | B-(b2)-7 | 10 | 5 | 5 | 5 | 0 | 0 | 0 |
| | 50 | | 5 | 5 | 5 | 5 | 0 | 0 | 0 |
| A-2 | 100 | B-(b2)-1 | 2,000 | 5 | 5 | 5 | 0 | 0 | 0 |
| | 50 | | 1,500 | 5 | 5 | 5 | 0 | 0 | 0 |
| | 100 | B-(b2)-2 | 1,500 | 5 | 5 | 5 | 0 | 0 | 0 |
| | 50 | | 1,000 | 5 | 5 | 5 | 0 | 0 | 0 |
| | 100 | B-(b2)-3 | 2,000 | 5 | 5 | 5 | 0 | 0 | 0 |
| | 50 | | 1,500 | 5 | 5 | 5 | 0 | 0 | 0 |
| | 100 | B-(b2)-4 | 10 | 5 | 5 | 5 | 0 | 0 | 0 |
| | 50 | | 5 | 5 | 5 | 5 | 0 | 0 | 0 |
| | 100 | B-(b2)-5 | 50 | 5 | 5 | 5 | 0 | 0 | 0 |
| | 50 | | 25 | 5 | 5 | 5 | 0 | 0 | 0 |
| | 100 | B-(b2)-6 | 20 | 5 | 5 | 5 | 0 | 0 | 0 |
| | 50 | | 10 | 5 | 5 | 5 | 0 | 0 | 0 |
| | 100 | B-(b2)-7 | 10 | 5 | 5 | 5 | 0 | 0 | 0 |
| | 50 | | 5 | 5 | 5 | 5 | 0 | 0 | 0 |

AA: Cleavers, BB: Creeping speedwell, CC: Violet, DD: Barley, EE: Wheat, FF: Oats

Table 20

| Triazine derivative | | Compound B-(b2) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-3 | 100 | B-(b2)-1 | 2,000 | 5 | 5 | 5 | 0 | 0 | 0 |
| | 50 | | 1,500 | 5 | 5 | 5 | 0 | 0 | 0 |
| | 100 | B-(b2)-2 | 1,500 | 5 | 5 | 5 | 0 | 0 | 0 |
| | 50 | | 1,000 | 5 | 5 | 5 | 0 | 0 | 0 |
| | 100 | B-(b2)-3 | 2,000 | 5 | 5 | 5 | 0 | 0 | 0 |
| | 50 | | 1,500 | 5 | 5 | 5 | 0 | 0 | 0 |
| | 100 | B-(b2)-4 | 10 | 5 | 5 | 5 | 0 | 0 | 0 |
| | 50 | | 5 | 5 | 5 | 5 | 0 | 0 | 0 |
| | 100 | B-(b2)-5 | 50 | 5 | 5 | 5 | 0 | 0 | 0 |
| | 50 | | 25 | 5 | 5 | 5 | 0 | 0 | 0 |
| | 100 | B-(b2)-6 | 20 | 5 | 5 | 5 | 0 | 0 | 0 |
| | 50 | | 10 | 5 | 5 | 5 | 0 | 0 | 0 |
| | 100 | B-(b2)-7 | 10 | 5 | 5 | 5 | 0 | 0 | 0 |
| | 50 | | 5 | 5 | 5 | 5 | 0 | 0 | 0 |
| A-4 | 100 | B-(b2)-1 | 2,000 | 5 | 5 | 5 | 0 | 0 | 0 |
| | 50 | | 1,500 | 5 | 5 | 5 | 0 | 0 | 0 |
| | 100 | B-(b2)-2 | 1,500 | 5 | 5 | 5 | 0 | 0 | 0 |
| | 50 | | 1,000 | 5 | 5 | 5 | 0 | 0 | 0 |
| | 100 | B-(b2)-3 | 2,000 | 5 | 5 | 5 | 0 | 0 | 0 |
| | 50 | | 1,500 | 5 | 5 | 5 | 0 | 0 | 0 |
| | 100 | B-(b2)-4 | 10 | 5 | 5 | 5 | 0 | 0 | 0 |
| | 50 | | 5 | 5 | 5 | 5 | 0 | 0 | 0 |
| | 100 | B-(b2)-5 | 50 | 5 | 5 | 5 | 0 | 0 | 0 |
| | 50 | | 25 | 5 | 5 | 5 | 0 | 0 | 0 |
| | 100 | B-(b2)-6 | 20 | 5 | 5 | 5 | 0 | 0 | 0 |
| | 50 | | 10 | 5 | 5 | 5 | 0 | 0 | 0 |
| | 100 | B-(b2)-7 | 10 | 5 | 5 | 5 | 0 | 0 | 0 |
| | 50 | | 5 | 5 | 5 | 5 | 0 | 0 | 0 |

AA: Cleavers, BB: Creeping speedwell, CC: Violet, DD: Barley, EE: Wheat, FF: Oats

Table 21

| Triazine derivative | | Compound B-(b2) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-5 | 100 | B-(b2)-1 | 2,000 | 5 | 5 | 5 | 0 | 0 | 0 |
| | 50 | | 1,500 | 5 | 5 | 5 | 0 | 0 | 0 |
| | 100 | B-(b2)-2 | 1,500 | 5 | 5 | 5 | 0 | 0 | 0 |
| | 50 | | 1,000 | 5 | 5 | 5 | 0 | 0 | 0 |
| | 100 | B-(b2)-3 | 2,000 | 5 | 5 | 5 | 0 | 0 | 0 |
| | 50 | | 1,500 | 5 | 5 | 5 | 0 | 0 | 0 |
| | 100 | B-(b2)-4 | 10 | 5 | 5 | 5 | 0 | 0 | 0 |
| | 50 | | 5 | 5 | 5 | 5 | 0 | 0 | 0 |
| | 100 | B-(b2)-5 | 50 | 5 | 5 | 5 | 0 | 0 | 0 |
| | 50 | | 25 | 5 | 5 | 5 | 0 | 0 | 0 |
| | 100 | B-(b2)-6 | 20 | 5 | 5 | 5 | 0 | 0 | 0 |
| | 50 | | 10 | 5 | 5 | 5 | 0 | 0 | 0 |
| | 100 | B-(b2)-7 | 10 | 5 | 5 | 5 | 0 | 0 | 0 |
| | 50 | | 5 | 5 | 5 | 5 | 0 | 0 | 0 |
| A-6 | 100 | B-(b2)-1 | 2,000 | 5 | 5 | 5 | 0 | 0 | 0 |
| | 50 | | 1,500 | 5 | 5 | 5 | 0 | 0 | 0 |
| | 100 | B-(b2)-2 | 1,500 | 5 | 5 | 5 | 0 | 0 | 0 |
| | 50 | | 1,000 | 5 | 5 | 5 | 0 | 0 | 0 |
| | 100 | B-(b2)-3 | 2,000 | 5 | 5 | 5 | 0 | 0 | 0 |
| | 50 | | 1,500 | 5 | 5 | 5 | 0 | 0 | 0 |
| | 100 | B-(b2)-4 | 10 | 5 | 5 | 5 | 0 | 0 | 0 |
| | 50 | | 5 | 5 | 5 | 5 | 0 | 0 | 0 |
| | 100 | B-(b2)-5 | 50 | 5 | 5 | 5 | 0 | 0 | 0 |
| | 50 | | 25 | 5 | 5 | 5 | 0 | 0 | 0 |
| | 100 | B-(b2)-6 | 20 | 5 | 5 | 5 | 0 | 0 | 0 |
| | 50 | | 10 | 5 | 5 | 5 | 0 | 0 | 0 |
| | 100 | B-(b2)-7 | 10 | 5 | 5 | 5 | 0 | 0 | 0 |
| | 50 | | 5 | 5 | 5 | 5 | 0 | 0 | 0 |

AA: Cleavers, BB: Creeping speedwell, CC: Violet, DD: Barley, EE: Wheat, FF: Oats

Table 22

| Triazine derivative | | Compound B-(b2) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-7 | 100 | B-(b2)-1 | 2,000 | 5 | 5 | 5 | 0 | 0 | 0 |
| | 50 | | 1,500 | 5 | 5 | 5 | 0 | 0 | 0 |
| | 100 | B-(b2)-2 | 1,500 | 5 | 5 | 5 | 0 | 0 | 0 |
| | 50 | | 1,000 | 5 | 5 | 5 | 0 | 0 | 0 |
| | 100 | B-(b2)-3 | 2,000 | 5 | 5 | 5 | 0 | 0 | 0 |
| | 50 | | 1,500 | 5 | 5 | 5 | 0 | 0 | 0 |
| | 100 | B-(b2)-4 | 10 | 5 | 5 | 5 | 0 | 0 | 0 |
| | 50 | | 5 | 5 | 5 | 5 | 0 | 0 | 0 |
| | 100 | B-(b2)-5 | 50 | 5 | 5 | 5 | 0 | 0 | 0 |
| | 50 | | 25 | 5 | 5 | 5 | 0 | 0 | 0 |
| | 100 | B-(b2)-6 | 20 | 5 | 5 | 5 | 0 | 0 | 0 |
| | 50 | | 10 | 5 | 5 | 5 | 0 | 0 | 0 |
| | 100 | B-(b2)-7 | 10 | 5 | 5 | 5 | 0 | 0 | 0 |
| | 50 | | 5 | 5 | 5 | 5 | 0 | 0 | 0 |
| A-8 | 100 | B-(b2)-1 | 2,000 | 5 | 5 | 5 | 0 | 0 | 0 |
| | 50 | | 1,500 | 5 | 5 | 5 | 0 | 0 | 0 |
| | 100 | B-(b2)-2 | 1,500 | 5 | 5 | 5 | 0 | 0 | 0 |
| | 50 | | 1,000 | 5 | 5 | 5 | 0 | 0 | 0 |
| | 100 | B-(b2)-3 | 2,000 | 5 | 5 | 5 | 0 | 0 | 0 |
| | 50 | | 1,500 | 5 | 5 | 5 | 0 | 0 | 0 |
| | 100 | B-(b2)-4 | 10 | 5 | 5 | 5 | 0 | 0 | 0 |
| | 50 | | 5 | 5 | 5 | 5 | 0 | 0 | 0 |
| | 100 | B-(b2)-5 | 50 | 5 | 5 | 5 | 0 | 0 | 0 |
| | 50 | | 25 | 5 | 5 | 5 | 0 | 0 | 0 |
| | 100 | B-(b2)-6 | 20 | 5 | 5 | 5 | 0 | 0 | 0 |
| | 50 | | 10 | 5 | 5 | 5 | 0 | 0 | 0 |
| | 100 | B-(b2)-7 | 10 | 5 | 5 | 5 | 0 | 0 | 0 |
| | 50 | | 5 | 5 | 5 | 5 | 0 | 0 | 0 |

AA: Cleavers, BB: Creeping speedwell, CC: Violet,
DD: Barley, EE: Wheat, FF: Oats

Table 23

| Active ingredient | | Dosage (g/ha) | Herbicidal efficacy | | | Phytotoxicity | | |
|---|---|---|---|---|---|---|---|---|
| | | | AA | BB | CC | DD | EE | FF |
| Triazine Derivative | A-1 | 100 | 2 | 5 | 5 | 0 | 0 | 0 |
| | | 50 | 1 | 3 | 4 | 0 | 0 | 0 |
| | A-2 | 100 | 3 | 5 | 5 | 0 | 0 | 0 |
| | | 50 | 2 | 4 | 4 | 0 | 0 | 0 |
| | A-3 | 100 | 3 | 5 | 4 | 0 | 0 | 0 |
| | | 50 | 1 | 3 | 3 | 0 | 0 | 0 |
| | A-4 | 100 | 3 | 4 | 4 | 0 | 0 | 0 |
| | | 50 | 1 | 2 | 3 | 0 | 0 | 0 |
| | A-5 | 100 | 2 | 5 | 5 | 0 | 0 | 0 |
| | | 50 | 2 | 3 | 4 | 0 | 0 | 0 |
| | A-6 | 100 | 3 | 5 | 5 | 0 | 0 | 0 |
| | | 50 | 2 | 4 | 4 | 0 | 0 | 0 |
| | A-7 | 100 | 3 | 5 | 4 | 0 | 0 | 0 |
| | | 50 | 1 | 3 | 4 | 0 | 0 | 0 |
| | A-8 | 100 | 2 | 4 | 4 | 0 | 0 | 0 |
| | | 50 | 1 | 3 | 2 | 0 | 0 | 0 |
| | A-9 | 100 | 2 | 4 | 4 | 0 | 0 | 0 |
| | | 50 | 1 | 4 | 2 | 0 | 0 | 0 |
| Compound B-(b2) | B-(b2)-1 | 2,000 | 2 | 2 | 1 | 0 | 0 | 0 |
| | | 1,500 | 1 | 0 | 0 | 0 | 0 | 0 |
| | B-(b2)-2 | 1,500 | 1 | 2 | 1 | 0 | 0 | 0 |
| | | 1,000 | 0 | 1 | 0 | 0 | 0 | 0 |
| | B-(b2)-3 | 2,000 | 1 | 1 | 1 | 0 | 0 | 0 |
| | | 1,500 | 0 | 0 | 0 | 0 | 0 | 0 |
| | B-(b2)-4 | 10 | 3 | 3 | 3 | 0 | 0 | 0 |
| | | 5 | 3 | 3 | 2 | 0 | 0 | 0 |
| | B-(b2)-5 | 50 | 2 | 2 | 2 | 0 | 0 | 0 |
| | | 25 | 1 | 0 | 1 | 0 | 0 | 0 |
| | B-(b2)-6 | 20 | 3 | 2 | 2 | 0 | 0 | 0 |
| | | 10 | 1 | 1 | 1 | 0 | 0 | 0 |
| | B-(b2)-7 | 10 | 3 | 2 | 2 | 0 | 0 | 0 |
| | | 5 | 1 | 1 | 1 | 0 | 0 | 0 |

AA: Cleavers, BB: Creeping speedwell, CC: Violet, DD: Barley, EE: Wheat, FF: Oats

Table 24

| Triazine derivative | | Compound B-(b3) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-1 | 100 | B-(b3)-1 | 1,000 | 5 | 5 | 5 | 0 | 0 | 0 |
| | 50 | | 500 | 5 | 5 | 5 | 0 | 0 | 0 |
| | 100 | B-(b3)-2 | 1,000 | 5 | 5 | 5 | 0 | 0 | 0 |
| | 50 | | 500 | 5 | 5 | 5 | 0 | 0 | 0 |
| | 100 | B-(b3)-3 | 2,000 | 5 | 5 | 5 | 0 | 0 | 0 |
| | 50 | | 1,000 | 5 | 5 | 5 | 0 | 0 | 0 |
| A-2 | 100 | B-(b3)-1 | 1,000 | 5 | 5 | 5 | 0 | 0 | 0 |
| | 50 | | 500 | 5 | 5 | 5 | 0 | 0 | 0 |
| | 100 | B-(b3)-2 | 1,000 | 5 | 5 | 5 | 0 | 0 | 0 |
| | 50 | | 500 | 5 | 5 | 5 | 0 | 0 | 0 |
| | 100 | B-(b3)-3 | 2,000 | 5 | 5 | 5 | 0 | 0 | 0 |
| | 50 | | 1,000 | 5 | 5 | 5 | 0 | 0 | 0 |
| A-3 | 100 | B-(b3)-1 | 1,000 | 5 | 5 | 5 | 0 | 0 | 0 |
| | 50 | | 500 | 5 | 5 | 5 | 0 | 0 | 0 |
| | 100 | B-(b3)-2 | 1,000 | 5 | 5 | 5 | 0 | 0 | 0 |
| | 50 | | 500 | 5 | 5 | 5 | 0 | 0 | 0 |
| | 100 | B-(b3)-3 | 2,000 | 5 | 5 | 5 | 0 | 0 | 0 |
| | 50 | | 1,000 | 5 | 5 | 5 | 0 | 0 | 0 |
| A-4 | 100 | B-(b3)-1 | 1,000 | 5 | 5 | 5 | 0 | 0 | 0 |
| | 50 | | 500 | 5 | 5 | 5 | 0 | 0 | 0 |
| | 100 | B-(b3)-2 | 1,000 | 5 | 5 | 5 | 0 | 0 | 0 |
| | 50 | | 500 | 5 | 5 | 5 | 0 | 0 | 0 |
| | 100 | B-(b3)-3 | 2,000 | 5 | 5 | 5 | 0 | 0 | 0 |
| | 50 | | 1,000 | 5 | 5 | 5 | 0 | 0 | 0 |
| A-5 | 100 | B-(b3)-1 | 1,000 | 5 | 5 | 5 | 0 | 0 | 0 |
| | 50 | | 500 | 5 | 5 | 5 | 0 | 0 | 0 |
| | 100 | B-(b3)-2 | 1,000 | 5 | 5 | 5 | 0 | 0 | 0 |
| | 50 | | 500 | 5 | 5 | 5 | 0 | 0 | 0 |
| | 100 | B-(b3)-3 | 2,000 | 5 | 5 | 5 | 0 | 0 | 0 |
| | 50 | | 1,000 | 5 | 5 | 5 | 0 | 0 | 0 |

AA: Cleavers, BB: Creeping speedwell, CC: Blackgrass
DD: Barley, EE: Wheat, FF: Oats

Table 25

| Triazine derivative | | Compound B-(b3) | | Herbicidal efficacy | | | Phytotoxicity | | |
|---|---|---|---|---|---|---|---|---|---|
| Active ingredient | Dosage (g/ha) | Active ingredient | Dosage (g/ha) | AA | BB | CC | DD | EE | FF |
| A-6 | 100 | B-(b3)-1 | 1,000 | 5 | 5 | 5 | 0 | 0 | 0 |
| | 50 | | 500 | 5 | 5 | 5 | 0 | 0 | 0 |
| | 100 | B-(b3)-2 | 1,000 | 5 | 5 | 5 | 0 | 0 | 0 |
| | 50 | | 500 | 5 | 5 | 5 | 0 | 0 | 0 |
| | 100 | B-(b3)-3 | 2,000 | 5 | 5 | 5 | 0 | 0 | 0 |
| | 50 | | 1,000 | 5 | 5 | 5 | 0 | 0 | 0 |
| A-7 | 100 | B-(b3)-1 | 1,000 | 5 | 5 | 5 | 0 | 0 | 0 |
| | 50 | | 500 | 5 | 5 | 5 | 0 | 0 | 0 |
| | 100 | B-(b3)-2 | 1,000 | 5 | 5 | 5 | 0 | 0 | 0 |
| | 50 | | 500 | 5 | 5 | 5 | 0 | 0 | 0 |
| | 100 | B-(b3)-3 | 2,000 | 5 | 5 | 5 | 0 | 0 | 0 |
| | 50 | | 1,000 | 5 | 5 | 5 | 0 | 0 | 0 |
| A-8 | 100 | B-(b3)-1 | 1,000 | 5 | 5 | 5 | 0 | 0 | 0 |
| | 50 | | 500 | 5 | 5 | 5 | 0 | 0 | 0 |
| | 100 | B-(b3)-2 | 1,000 | 5 | 5 | 5 | 0 | 0 | 0 |
| | 50 | | 500 | 5 | 5 | 5 | 0 | 0 | 0 |
| | 100 | B-(b3)-3 | 2,000 | 5 | 5 | 5 | 0 | 0 | 0 |
| | 50 | | 1,000 | 5 | 5 | 5 | 0 | 0 | 0 |
| A-9 | 100 | B-(b3)-1 | 1,000 | 5 | 5 | 5 | 0 | 0 | 0 |
| | 50 | | 500 | 5 | 5 | 5 | 0 | 0 | 0 |
| | 100 | B-(b3)-2 | 1,000 | 5 | 5 | 5 | 0 | 0 | 0 |
| | 50 | | 500 | 5 | 5 | 5 | 0 | 0 | 0 |
| | 100 | B-(b3)-3 | 2,000 | 5 | 5 | 5 | 0 | 0 | 0 |
| | 50 | | 1,000 | 5 | 5 | 5 | 0 | 0 | 0 |

AA: Cleavers, BB: Creeping speedwell, CC: Blackgrass
DD: Barley, EE: Wheat, FF: Oats

Table 26

| Active ingredient | | Dosage (g/ha) | Herbicidal efficacy | | | Phytotoxicity | | |
|---|---|---|---|---|---|---|---|---|
| | | | AA | BB | CC | DD | EE | FF |
| Triazine Derivative | A-1 | 100 | 2 | 5 | 2 | 0 | 0 | 0 |
| | | 50 | 1 | 3 | 0 | 0 | 0 | 0 |
| | A-2 | 100 | 3 | 5 | 2 | 0 | 0 | 0 |
| | | 50 | 2 | 4 | 2 | 0 | 0 | 0 |
| | A-3 | 100 | 3 | 5 | 1 | 0 | 0 | 0 |
| | | 50 | 1 | 3 | 1 | 0 | 0 | 0 |
| | A-4 | 100 | 3 | 4 | 1 | 0 | 0 | 0 |
| | | 50 | 1 | 2 | 0 | 0 | 0 | 0 |
| | A-5 | 100 | 2 | 5 | 2 | 0 | 0 | 0 |
| | | 50 | 2 | 3 | 1 | 0 | 0 | 0 |
| | A-6 | 100 | 3 | 5 | 2 | 0 | 0 | 0 |
| | | 50 | 2 | 4 | 1 | 0 | 0 | 0 |
| | A-7 | 100 | 3 | 5 | 1 | 0 | 0 | 0 |
| | | 50 | 1 | 3 | 1 | 0 | 0 | 0 |
| | A-8 | 100 | 2 | 4 | 1 | 0 | 0 | 0 |
| | | 50 | 1 | 3 | 0 | 0 | 0 | 0 |
| | A-9 | 100 | 2 | 4 | 1 | 0 | 0 | 0 |
| | | 50 | 1 | 4 | 1 | 0 | 0 | 0 |
| Compound B-(b3) | B-(b3)-1 | 1,000 | 3 | 3 | 4 | 0 | 0 | 0 |
| | | 500 | 2 | 2 | 4 | 0 | 0 | 0 |
| | B-(b3)-2 | 1,000 | 3 | 3 | 5 | 0 | 0 | 0 |
| | | 500 | 2 | 3 | 4 | 0 | 0 | 0 |
| | B-(b3)-3 | 2,000 | 3 | 4 | 4 | 0 | 0 | 0 |
| | | 1,000 | 2 | 2 | 3 | 0 | 0 | 0 |

AA: Cleavers, BB: Creeping speedwell, CC: Blackgrass
DD: Barley, EE: Wheat, FF: Oats

The results in Tables 13 to 26 show the following. The herbicide compositions of the present invention, which were prepared by mixing the wettable powders A and the wettable powders B-(b1), B-(b2) or B-(b3), exhibited excellent herbicidal efficacy against all the weeds such as cleavers, persian speedwell and violet or annual bluegrass and caused no phytotoxicity on barley, wheat and oats. In contrast, when the wettable powders A, or the wettable powders B-(b1), B-(b2) or B-(b3) were applied alone, the herbicidal efficacy differed depending upon kinds of weeds, and in some cases, no sufficient herbicidal efficacy was obtained.

Test Example 2:

For evaluating the synergistic effects of the herbicide compositions of the present invention, estimate values (QE) were calculated on the basis of the following equation using the weed control ratios against cleavers found when each

of the wettable powders A, the wettable powders B-(b1), B-(b2) and B-(b3) was applied alone, and the estimate values (QE) were compared with weed control ratios (found values) against cleavers measured in the above Test Example 1 when the wettable powders as the herbicide compositions of the present invention were applied. When a found value exceeds an estimate value, it is determined that a synergistic effect is produced.

$$QE = Qa + Qb - (Qa \cdot Qb/100)$$

QE: Estimate value

Qa: Weed control ratio found when each of Compounds A-1 to A-9 alone was applied in an amount equivalent to a g/hectare as an active ingredient.

Qb: Weed control ratio found when each of Compounds B-(b1), B-(b2) and B-(b3) alone was applied in an amount equivalent to b g/hectare as an active ingredient.

The following Tables 27 to 33 show the results.

Table 27

| Triazine derivative | | Compound B-(b1) | | Herbicidal efficacy (Cleavers) | |
|---|---|---|---|---|---|
| Active ingredient | Dosage (g/ha) | Active ingredient | Dosage (g/ha) | Found Weed control ratio (%) | Estimate Q Weed control ratio (%) |
| A-1 | 50 | B-(b1)-1 | 25 | 92 | 39 |
| | | B-(b1)-2 | 100 | 90 | 28 |
| | | B-(b1)-3 | 25 | 97 | 43 |
| | | B-(b1)-4 | 100 | 98 | 44 |
| | | B-(b1)-5 | 50 | 91 | 24 |
| | | B-(b1)-6 | 100 | 93 | 27 |
| | | B-(b1)-7 | 25 | 90 | 20 |
| A-2 | 50 | B-(b1)-1 | 25 | 98 | 54 |
| | | B-(b1)-2 | 100 | 95 | 45 |
| | | B-(b1)-3 | 25 | 96 | 56 |
| | | B-(b1)-4 | 100 | 97 | 57 |
| | | B-(b1)-5 | 50 | 91 | 42 |
| | | B-(b1)-6 | 100 | 90 | 44 |
| | | B-(b1)-7 | 25 | 91 | 39 |
| A-3 | 50 | B-(b1)-1 | 25 | 90 | 44 |
| | | B-(b1)-2 | 100 | 92 | 36 |
| | | B-(b1)-3 | 25 | 91 | 47 |
| | | B-(b1)-4 | 100 | 93 | 48 |
| | | B-(b1)-5 | 50 | 90 | 23 |
| | | B-(b1)-6 | 100 | 91 | 33 |
| | | B-(b1)-7 | 25 | 91 | 26 |

Table 28

| Triazine derivative | | Compound B-(b1) | | Herbicidal efficacy (Cleavers) | |
|---|---|---|---|---|---|
| Active ingredient | Dosage (g/ha) | Active ingredient | Dosage (g/ha) | Found Weed control ratio (%) | Estimate Q Weed control ratio (%) |
| A-4 | 50 | B-(b1)-1 | 25 | 91 | 43 |
| | | B-(b1)-2 | 100 | 92 | 33 |
| | | B-(b1)-3 | 25 | 91 | 47 |
| | | B-(b1)-4 | 100 | 93 | 48 |
| | | B-(b1)-5 | 50 | 90 | 29 |
| | | B-(b1)-6 | 100 | 94 | 31 |
| | | B-(b1)-7 | 25 | 90 | 25 |
| A-5 | 50 | B-(b1)-1 | 25 | 97 | 54 |
| | | B-(b1)-2 | 100 | 95 | 46 |
| | | B-(b1)-3 | 25 | 97 | 57 |
| | | B-(b1)-4 | 100 | 99 | 58 |
| | | B-(b1)-5 | 50 | 91 | 43 |
| | | B-(b1)-6 | 100 | 92 | 45 |
| | | B-(b1)-7 | 25 | 93 | 40 |
| A-6 | 50 | B-(b1)-1 | 25 | 98 | 52 |
| | | B-(b1)-2 | 100 | 95 | 43 |
| | | B-(b1)-3 | 25 | 97 | 55 |
| | | B-(b1)-4 | 100 | 97 | 55 |
| | | B-(b1)-5 | 50 | 91 | 40 |
| | | B-(b1)-6 | 100 | 91 | 42 |
| | | B-(b1)-7 | 25 | 90 | 36 |

Table 29

| Triazine derivative | | Compound B-(b1) | | Herbicidal efficacy (Cleavers) | |
|---|---|---|---|---|---|
| Active ingredient | Dosage (g/ha) | Active ingredient | Dosage (g/ha) | Found Weed control ratio (%) | Estimate Q Weed control ratio (%) |
| A-7 | 50 | B-(b1)-1 | 25 | 92 | 43 |
| | | B-(b1)-2 | 100 | 91 | 32 |
| | | B-(b1)-3 | 25 | 91 | 46 |
| | | B-(b1)-4 | 100 | 93 | 47 |
| | | B-(b1)-5 | 50 | 90 | 29 |
| | | B-(b1)-6 | 100 | 92 | 31 |
| | | B-(b1)-7 | 25 | 90 | 24 |
| A-8 | 50 | B-(b1)-1 | 25 | 94 | 44 |
| | | B-(b1)-2 | 100 | 93 | 36 |
| | | B-(b1)-3 | 25 | 95 | 47 |
| | | B-(b1)-4 | 100 | 95 | 48 |
| | | B-(b1)-5 | 50 | 90 | 30 |
| | | B-(b1)-6 | 100 | 92 | 33 |
| | | B-(b1)-7 | 25 | 90 | 26 |
| A-9 | 50 | B-(b1)-1 | 25 | 91 | 43 |
| | | B-(b1)-2 | 100 | 93 | 33 |
| | | B-(b1)-3 | 25 | 90 | 47 |
| | | B-(b1)-4 | 100 | 94 | 48 |
| | | B-(b1)-5 | 50 | 91 | 29 |
| | | B-(b1)-6 | 100 | 92 | 31 |
| | | B-(b1)-7 | 25 | 90 | 25 |

Table 30

| Triazine derivative | | Compound B-(b2) | | Herbicidal efficacy (Cleavers) | |
|---|---|---|---|---|---|
| Active ingredient | Dosage (g/ha) | Active ingredient | Dosage (g/ha) | Found Weed control ratio (%) | Estimate Q Weed control ratio (%) |
| A-1 | 50 | B-(b2)-1 | 1,500 | 92 | 35 |
| | | B-(b2)-2 | 1,000 | 90 | 22 |
| | | B-(b2)-3 | 1,500 | 91 | 22 |
| | | B-(b2)-4 | 5 | 99 | 63 |
| | | B-(b2)-5 | 25 | 91 | 34 |
| | | B-(b2)-6 | 10 | 93 | 35 |
| | | B-(b2)-7 | 5 | 90 | 34 |
| A-2 | 50 | B-(b2)-1 | 1,500 | 98 | 50 |
| | | B-(b2)-2 | 1,000 | 95 | 40 |
| | | B-(b2)-3 | 1,500 | 96 | 40 |
| | | B-(b2)-4 | 5 | 98 | 72 |
| | | B-(b2)-5 | 25 | 91 | 50 |
| | | B-(b2)-6 | 10 | 90 | 50 |
| | | B-(b2)-7 | 5 | 91 | 49 |
| A-3 | 50 | B-(b2)-1 | 1,500 | 90 | 34 |
| | | B-(b2)-2 | 1,000 | 92 | 21 |
| | | B-(b2)-3 | 1,500 | 90 | 21 |
| | | B-(b2)-4 | 5 | 99 | 72 |
| | | B-(b2)-5 | 25 | 90 | 34 |
| | | B-(b2)-6 | 10 | 92 | 34 |
| | | B-(b2)-7 | 5 | 91 | 33 |

Table 31

| Triazine derivative | | Compound B-(b2) | | Herbicidal efficacy (Cleavers) | |
|---|---|---|---|---|---|
| Active ingredient | Dosage (g/ha) | Active ingredient | Dosage (g/ha) | Found Weed control ratio (%) | Estimate Q Weed control ratio (%) |
| A-4 | 50 | B-(b2)-1 | 1,500 | 93 | 40 |
| | | B-(b2)-2 | 1,000 | 92 | 23 |
| | | B-(b2)-3 | 1,500 | 91 | 23 |
| | | B-(b2)-4 | 5 | 98 | 74 |
| | | B-(b2)-5 | 25 | 90 | 35 |
| | | B-(b2)-6 | 10 | 94 | 36 |
| | | B-(b2)-7 | 5 | 90 | 34 |
| A-5 | 50 | B-(b2)-1 | 1,500 | 97 | 49 |
| | | B-(b2)-2 | 1,000 | 95 | 39 |
| | | B-(b2)-3 | 1,500 | 97 | 39 |
| | | B-(b2)-4 | 5 | 99 | 71 |
| | | B-(b2)-5 | 25 | 91 | 48 |
| | | B-(b2)-6 | 10 | 92 | 49 |
| | | B-(b2)-7 | 5 | 93 | 48 |
| A-6 | 50 | B-(b2)-1 | 1,500 | 98 | 50 |
| | | B-(b2)-2 | 1,000 | 95 | 40 |
| | | B-(b2)-3 | 1,500 | 97 | 40 |
| | | B-(b2)-4 | 5 | 98 | 72 |
| | | B-(b2)-5 | 25 | 91 | 49 |
| | | B-(b2)-6 | 10 | 91 | 50 |
| | | B-(b2)-7 | 5 | 90 | 48 |

Table 32

| Triazine derivative | | Compound B-(b2) | | Herbicidal efficacy (Cleavers) | |
|---|---|---|---|---|---|
| Active ingredient | Dosage (g/ha) | Active ingredient | Dosage (g/ha) | Found Weed control ratio (%) | Estimate Q Weed control ratio (%) |
| A-7 | 50 | B-(b2)-1 | 1,500 | 92 | 35 |
| | | B-(b2)-2 | 1,000 | 91 | 22 |
| | | B-(b2)-3 | 1,500 | 90 | 22 |
| | | B-(b2)-4 | 5 | 97 | 63 |
| | | B-(b2)-5 | 25 | 90 | 34 |
| | | B-(b2)-6 | 10 | 92 | 35 |
| | | B-(b2)-7 | 5 | 91 | 34 |
| A-8 | 50 | B-(b2)-1 | 1,500 | 94 | 36 |
| | | B-(b2)-2 | 1,000 | 93 | 23 |
| | | B-(b2)-3 | 1,500 | 95 | 23 |
| | | B-(b2)-4 | 5 | 96 | 54 |
| | | B-(b2)-5 | 25 | 90 | 35 |
| | | B-(b2)-6 | 10 | 92 | 36 |
| | | B-(b2)-7 | 5 | 90 | 34 |
| A-9 | 50 | B-(b2)-1 | 1,500 | 91 | 35 |
| | | B-(b2)-2 | 1,000 | 93 | 22 |
| | | B-(b2)-3 | 1,500 | 90 | 22 |
| | | B-(b2)-4 | 5 | 98 | 63 |
| | | B-(b2)-5 | 25 | 91 | 34 |
| | | B-(b2)-6 | 10 | 92 | 35 |
| | | B-(b2)-7 | 5 | 90 | 34 |

Table 33

| Triazine derivative | | Compound B-(b3) | | Herbicidal efficacy (Cleavers) | |
|---|---|---|---|---|---|
| Active ingredient | Dosage (g/ha) | Active ingredient | Dosage (g/ha) | Found Weed control ratio (%) | Estimate Q Weed control ratio (%) |
| A-1 | 50 | B-(b3)-1 | 500 | 92 | 47 |
| | | B-(b3)-2 | 500 | 90 | 49 |
| | | B-(b3)-3 | 1,000 | 94 | 51 |
| A-2 | 50 | B-(b3)-1 | 500 | 94 | 58 |
| | | B-(b3)-2 | 500 | 95 | 60 |
| | | B-(b3)-3 | 1,000 | 97 | 62 |
| A-3 | 50 | B-(b3)-1 | 500 | 92 | 48 |
| | | B-(b3)-2 | 500 | 91 | 50 |
| | | B-(b3)-3 | 1,000 | 93 | 51 |
| A-4 | 50 | B-(b3)-1 | 500 | 91 | 47 |
| | | B-(b3)-2 | 500 | 91 | 49 |
| | | B-(b3)-3 | 1,000 | 95 | 50 |
| A-5 | 50 | B-(b3)-1 | 500 | 96 | 60 |
| | | B-(b3)-2 | 500 | 97 | 62 |
| | | B-(b3)-3 | 1,000 | 98 | 63 |
| A-6 | 50 | B-(b3)-1 | 500 | 95 | 59 |
| | | B-(b3)-2 | 500 | 97 | 60 |
| | | B-(b3)-3 | 1,000 | 98 | 62 |
| A-7 | 50 | B-(b3)-1 | 500 | 93 | 48 |
| | | B-(b3)-2 | 500 | 93 | 50 |
| | | B-(b3)-3 | 1,000 | 96 | 51 |
| A-8 | 50 | B-(b3)-1 | 500 | 95 | 47 |
| | | B-(b3)-2 | 500 | 94 | 49 |
| | | B-(b3)-3 | 1,000 | 97 | 51 |
| A-9 | 50 | B-(b3)-1 | 500 | 94 | 48 |
| | | B-(b3)-2 | 500 | 96 | 50 |
| | | B-(b3)-3 | 1,000 | 96 | 51 |

The results in Tables 27 to 33 show that the synergistic effect of the herbicidal efficacy produced by the use of the component A (Compounds A-1 to A-9) and the component B [Compounds B-(b1), B-(b2) and B-(b3)] of the herbicide composition of the present invention in combination is clear when cleavers are taken up as an example. That is, it has been found that all the herbicide compositions of the present invention exhibit high synergistic effects due to a large difference between the found values and the estimate values of weed control ratios against cleavers.

Industrial Utility

The herbicide composition of the present invention can effectively control a broad range of weeds, broad-leaved weeds and grass weeds in particular, at a low dosage without causing phytotoxicity on crops such as barley and wheat or lawn and can serve to further improve the productivity of agricultural crops and to attain labor saving.

**Claims**

1. A herbicide composition comprising, as active ingredients, (A) a triazine derivative of the general formula (I),

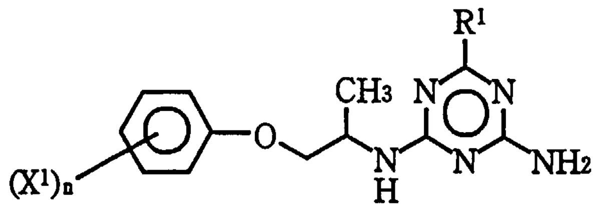

(I)

(wherein $X^1$ is a linear or branched $C_1$-$C_4$ alkyl group or a halogen atom, n is an integer of 0 to 4, provided that when n is an integer of 2 or more, a plurality of $X^1$s may be the same as, or different from, each other, and

$R^1$ is a linear or branched $C_1$-$C_{10}$ alkyl group, provided that the said alkyl group may have one substituent selected from a $C_1$-$C_4$ alkoxy group, a hydroxyl group and a halogen atom, or may have 2 to 4 substituents of these which are the same or different),

or a slat thereof, and (B) at least one compound selected from the class consisting of (b1) a phenoxy herbicide, a benzoic herbicide and a pyridine herbicide, (b2) a urea herbicide, a sulfonylurea herbicide and a sulfoneamide herbicide and (b3) a dinitroaniline herbicide and a carbamate herbicide.

2. The herbicide composition of claim 1, wherein $X^1$ in the general formula (I) is methyl or a fluorine atom.

3. The herbicide composition of claim 2, wherein n in the general formula (I) is 1 or 2.

4. The herbicide composition of claim 3, wherein position where $X^1$ is substituted is 3- or 5-position or positions where $X^1$s are substituted are both of them.

5. The herbicide composition of claim 1, wherein $R^1$ in the general formula (I) is a linear or branched $C_1$-$C_6$ alkyl group on which none of a $C_1$-$C_4$ alkoxy group, a hydroxyl group and a halogen atom is substituted.

6. The herbicide composition of claim 1, wherein $R^1$ in the general formula (I) is a linear or branched $C_1$-$C_4$ alkyl group on which 1 or 2 methoxy groups, one butoxy group or one hydroxyl group is substituted.

7. The herbicide composition of claim 1, wherein the phenoxy herbicide of the (b1) group in component (B) is a compound of the general formula (III),

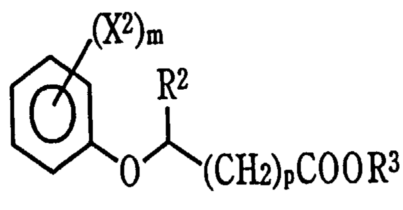

(III)

(wherein $X^2$ is a halogen atom or a linear or branched $C_1$-$C_4$ alkyl group on which a halogen atom may be substituted, m is an integer of 0 to 5, provided that when m is an integer of 2 or more, a plurality of $X^2$s may be the same as, or different from, each other; $R^2$ is a hydrogen atom or a linear or branched $C_1$-$C_4$ alkyl group; $R^3$ is a hydrogen atom or a linear or branched $C_1$-$C_4$ alkyl group, and p is an integer of 0 to 4).

8. The herbicide composition of claim 7, wherein the phenoxy herbicide is at least one compound selected from the group consisting of

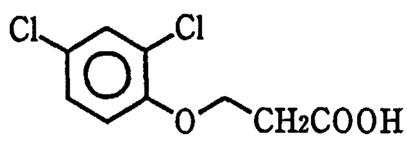

2,4-D

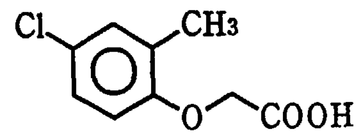

MCPA

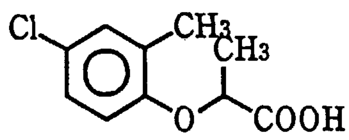

MCPP

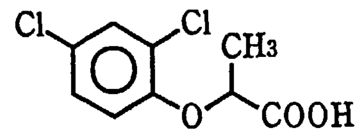

Dichloroprop

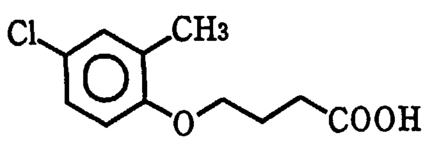

MCPB.

9. The herbicide composition of claim 1, wherein the benzoic herbicide of the (b1) group in component (B) is a compound of the general formula (IV),

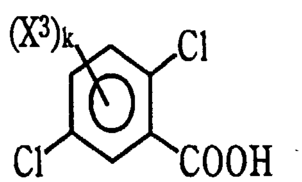

(IV)

(wherein $X^3$ is a halogen atom, a linear or branched $C_1$-$C_4$ alkoxy group, an amino group or a nitro group and k is an integer of 0 to 3, provided that when k is an integer of 2 or more, a plurality of $X^3$s may be the same as, or different from, each other).

10. The herbicide composition of claim 9, wherein the benzoic herbicide is at least one compound selected from the group consisting of

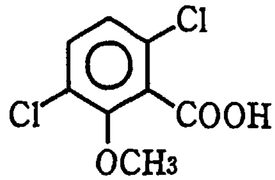

Dicamba

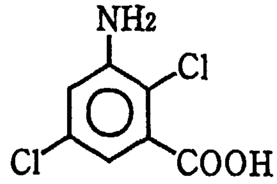

Amiben

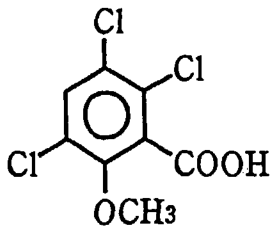

Tricamba.

**11.** The herbicide composition of claim 1, wherein the pyridine herbicide of the (b1) group in component (B) is a compound of the general formula (V),

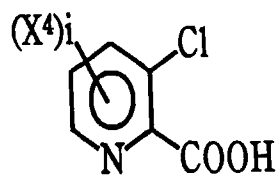

(V)

(wherein $X^4$ is a halogen atom or an amino group and i is an integer of 0 to 3, provided that when i is an integer of 2 or more, a plurality of $X^4$s may be the same as, or different from, each other), or a compound of the general formula (VI),

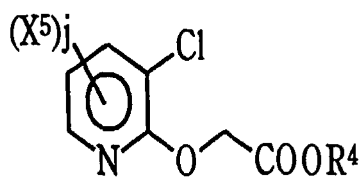

(VI)

(wherein $X^5$ is a halogen atom or an amino group, j is an integer of 0 to 3, provided that when j is an integer of 2 or more, a plurality of $X^5$s may be the same as, or different from, each other, and $R^4$ is a hydrogen atom or a linear or branched $C_1$-$C_{10}$ alkyl group).

**12.** The herbicide composition of claim 11, wherein the pyridine herbicide is at least one compound selected from the group consisting of

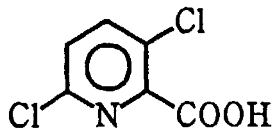
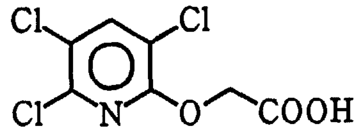

Clopyralid Triclopyr

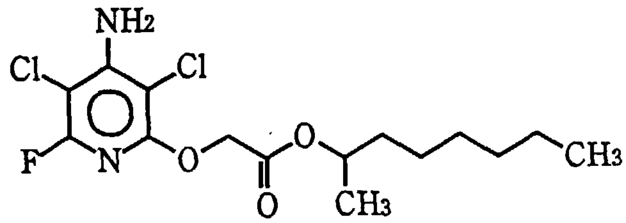

Fluroxypyr

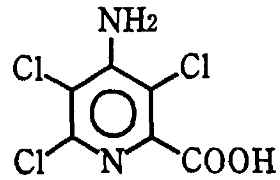

Picloram.

**13.** The herbicide composition of claim 1, wherein the the urea herbicide of the (b1) group in component (B) is a compound of the general formula (VII),

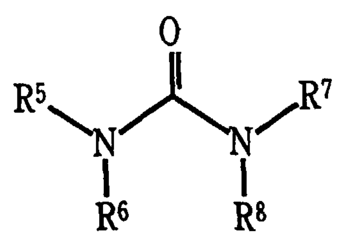

(VII)

(wherein $R^5$ is an optionally substituted phenyl group or aromatic heterocyclic group, $R^6$ is a hydrogen atom or a linear or branched $C_1$-$C_6$ alkyl group, $R^7$ is a linear or branched $C_1$-$C_6$ alkyl group, and $R^8$ is a hydrogen atom, a linear or branched $C_1$-$C_6$ alkyl group or a linear or branched $C_1$-$C_6$ alkoxy group).

**14.** The herbicide composition of claim 13, wherein the urea herbicide is at least one compound selected from the group consisting of

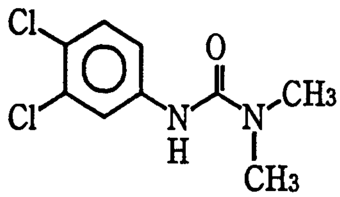

Diuron

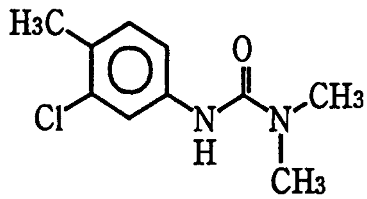

Chlorotoluron

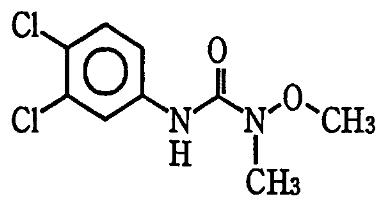

Linuron

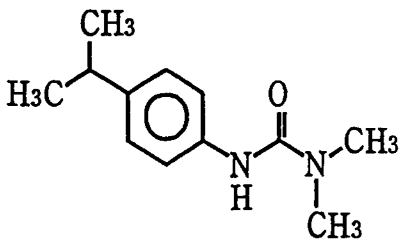

Isoproturon

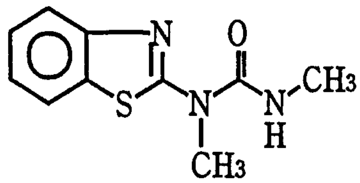

Methabenzthiazuron.

**15.** The herbicide composition of claim 1, wherein the sulfonylurea herbicide of the (b2) group in component (B) is a compound of the general formula (VIII),

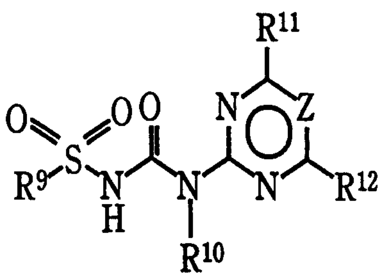

(VIII)

(wherein Z is a nitrogen atom or a carbon atom, $R^9$ is an optionally substituted phenyl group, aromatic heterocyclic group or sulfoneamide group, $R^{10}$ is a hydrogen atom or a linear or branched $C_1$-$C_6$ alkyl group, $R^{11}$ is a hydrogen atom, a linear or branched $C_1$-$C_6$ alkyl group, a linear or branched $C_1$-$C_6$ alkoxy group or a linear or branched $C_1$-$C_6$ haloalkoxy group, $R^{12}$ is a hydrogen atom, a linear or branched $C_1$-$C_6$ alkyl group, a linear or branched $C_1$-$C_6$ alkoxy group or a linear or branched $C_1$-$C_6$ haloalkoxy group).

**16.** The herbicide composition of claim 15, wherein the sulfonylurea herbicide is at least one compound selected from the group consisting of

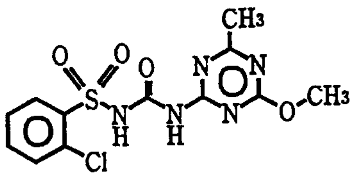

Chlorosulfuron

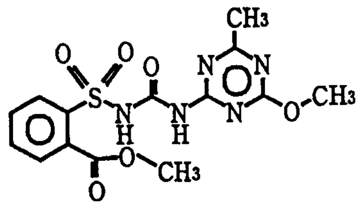

Metsulfuron-methyl

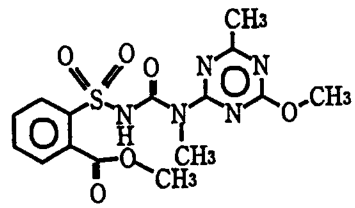

Tribenuron -methyl

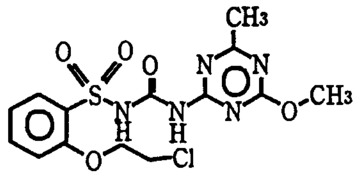

Triasulfuron

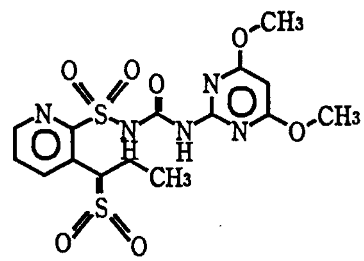

Rimsulfuron -methyl

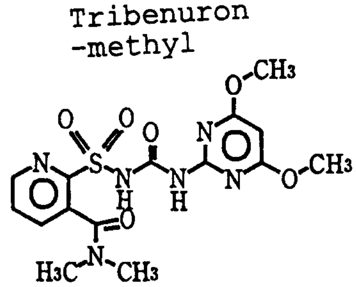

Nicosulfuron

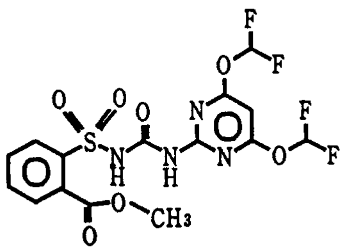

Primisulfuron -methyl

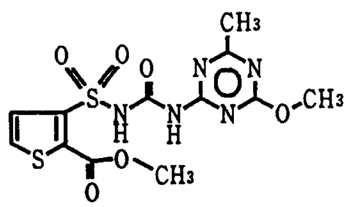

Thiphensulfuron -methyl

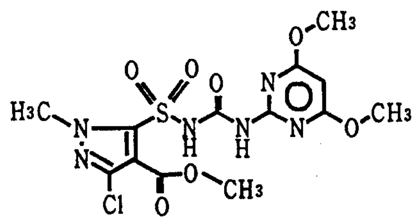

Halosulfuron-methyl

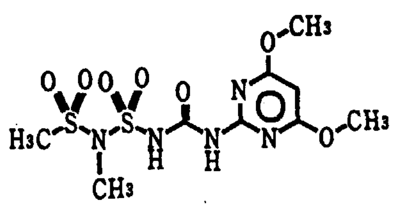

Amidosulfuron.

17. The herbicide composition of claim 1, wherein the sulfoneamide herbicide of the (b2) group in component (B) is a compound of the general formula (IX),

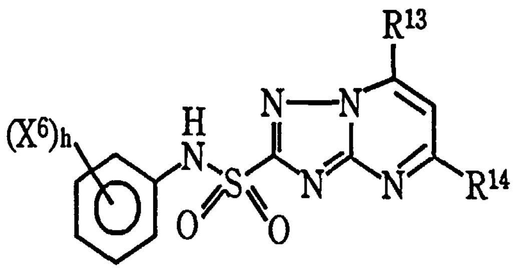

(IX)

(wherein $X^6$ is a linear or branched $C_1$-$C_6$ alkyl group or a halogen atom, h is an integer of 0 to 4, provided that when h is an integer of 2 or more, a plurality of $X^6$s may be the same as, or different from, each other, $R^{13}$ is a hydrogen atom, a linear or branched $C_1$-$C_6$ alkyl group or a linear or branched $C_1$-$C_6$ alkoxy group, and $R^{14}$ is a hydrogen atom, a linear or branched $C_1$-$C_6$ alkyl group or a linear or branched $C_1$-$C_6$ alkoxy group).

**18.** The herbicide composition of claim 17, wherein the sulfoneamide herbicide is at least one compound selected from the group consisting of

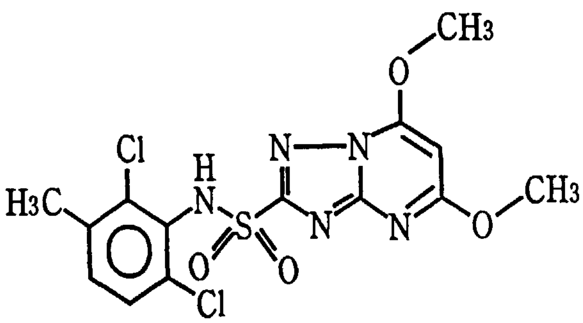

Metosulam

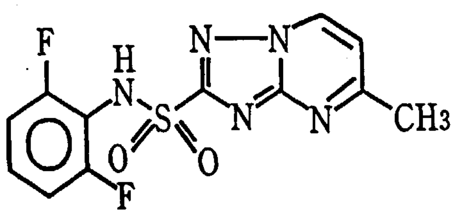

Flumethosulam

**19.** The herbicide composition of claim 1, wherein the dinitroaniline herbicide of the (b3) group in component (B) is a compound of the general formula (X),

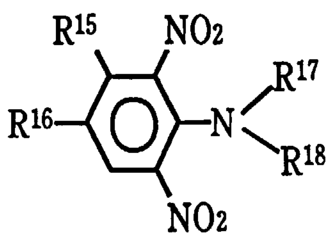

(x)

(wherein $R^{15}$ is a hydrogen atom, an amino group or a linear or branched $C_1$-$C_6$ alkyl group, $R^{16}$ is a linear or branched $C_1$-$C_6$ alkyl group, a linear or branched $C_1$-$C_6$ alkoxy group, a linear or branched $C_1$-$C_6$ haloalkyl group or a sulfoneamide group, $R^{17}$ is a hydrogen atom, a linear or branched $C_1$-$C_6$ alkyl group, a linear or branched $C_1$-$C_6$ alkenyl group or a linear or branched $C_1$-$C_6$ alkoxy group, $R^{18}$ is a hydrogen atom, a linear or branched $C_1$-$C_6$ alkyl group, a linear or branched $C_1$-$C_6$ alkenyl group or a linear or branched $C_1$-$C_6$ alkoxy group).

**20.** The herbicide composition of claim 19, wherein the dinitroaniline herbicide is at least one compound selected from the group consisting of

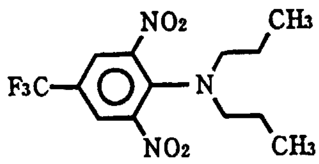

Trifluralin

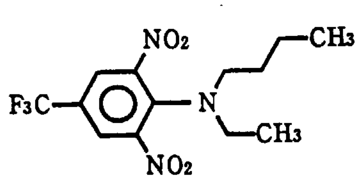

Benfluralin

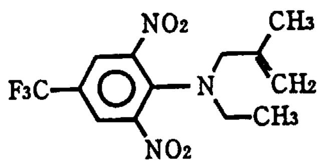

Ethalfluralin

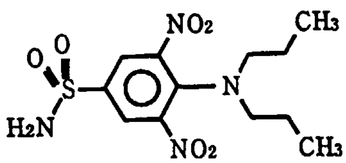

Oryzalin

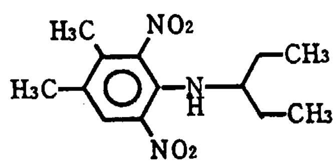

Pendimethalin

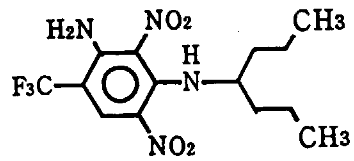

Prodiamine.

**21.** The herbicide composition of claim 1, wherein the carbamate herbicide of the (b3) group in component (B) is a compound of the general formula (XI),

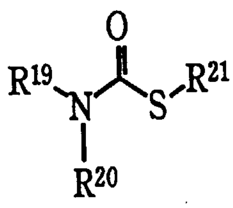

(XI)

(wherein $R^{19}$ is a hydrogen atom or a linear or branched $C_1$-$C_6$ alkyl group, $R^{20}$ is a hydrogen atom or a linear or branched $C_1$-$C_6$ alkyl group, $R^{21}$ is an optionally substituted phenyl group, $C_7$-$C_{12}$ aralkyl group or aromatic heterocyclic group, a linear or branched $C_1$-$C_6$ alkyl group, a linear or branched $C_1$-$C_6$ alkoxy group, a linear or branched $C_1$-$C_6$ haloalkyl group or a linear or branched $C_1$-$C_6$ haloalkenyl group).

**22.** The herbicide composition of claim 21, wherein the carbamate herbicide is at least one compound selected from the group consisting of

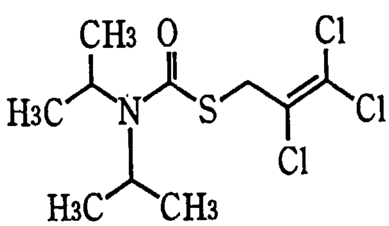

Triallate

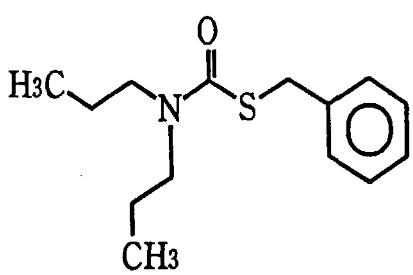

Prosulfocarb.

**23.** The herbicide composition of claim 1, which contains the component (A) and the (b1) group of the component (B) in a weight ratio of 100:1 to 1:500.

24. The herbicide composition of claim 1, which contains the component (A) and the urea herbicide of the (b2) group of the component (B) in a weight ratio of 10:1 to 1:500.

25. The herbicide composition of claim 1, which contains the component (A) and the sulfonylurea herbicide of the (b2) group of the component (B) in a weight ratio of 100:1 to 1:10.

26. The herbicide composition of claim 1, which contains the component (A) and the sulfoneamide herbicide of the (b2) group of the component (B) in a weight ratio of 10:1 to 1:100.

27. The herbicide composition of claim 1, which contains the component (A) and the (b3) group Of the component (B) in a weight ratio of 1:1 to 1:1,000.

**INTERNATIONAL SEARCH REPORT**

International application No.
PCT/JP97/00926

A. CLASSIFICATION OF SUBJECT MATTER Int. Cl6 A01N43/68 // (A01N43/68, A01N37:02) (A01N43/68, A01N37:10) (A01N43/68, A01N43:40) (A01N43/68, A01N47:30) (A01N43/68, A01N41:06) (A01N43/68, A01N33:18) (A01N43/68, A01N47:10)

According to International Patent Classification (IPC) or to both national classification and IPC

B. FIELDS SEARCHED

Minimum documentation searched (classification system followed by classification symbols)
Int. Cl6 A01N43/64-43/70, 33/14-33/22, 37/10, 43/40, 41/06, 47/10, 47/28-47/32, C07D251/18

Documentation searched other than minimum documentation to the extent that such documents are included in the fields searched

Electronic data base consulted during the international search (name of data base and, where practicable, search terms used)
CAS ONLINE

C. DOCUMENTS CONSIDERED TO BE RELEVANT

| Category* | Citation of document, with indication, where appropriate, of the relevant passages | Relevant to claim No. |
|---|---|---|
| X | JP, 4-235105, A (Idemitsu Kosan Co., Ltd.), August 24, 1992 (24. 08. 92), Claim; par. Nos. (0001), (0017) to (0023), (0033); Tables 1 to 3 & EP, 464518, B1 & CA, 2045834, A & US, 5169425, A & DE, 69106236, A1 | 1-4, 7, 8, 14, 15 23-24 |
| X | JP, 4-95003, A (Idemitsu Kosan Co., Ltd.), March 27, 1992 (27. 03. 92), Claim; page 4, upper left column, line 14 to lower right column, line 13; Tables 1, 2 (Family: none) | 1-4, 19, 20, 27 |
| X | JP, 4-77403, A (Idemitsu Kosan Co., Ltd.), March 11, 1992 (11. 03. 92), Claim; page 4, upper left column, line 14 to lower right column, line 15; Tables 1, 2 & EP, 467204, B1 & DE, 69106252, A1 & ES, 2069132, T3 | 1-4, 13, 14, 24 |
| X | JP, 7-267805, A (Idemitsu Kosan Co., Ltd.), | 1-4, 11, |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| June 13, 1997 (13. 06. 97) | July 1, 1997 (01. 07. 97) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP97/00926

C (Continuation). DOCUMENTS CONSIDERED TO BE RELEVANT

| Category* | Citation of document, with indication, where appropriate, of the relevant passages | Relevant to claim No. |
|---|---|---|
| | October 17, 1995 (17. 10. 95), Claim; par. Nos. (0006), (0018) to (0029); Tables 1, 2 (Family: none) | 12, 15, 19, 20, 23, 24, 25, 27 |
| X | JP, 7-267804, A (Idemitsu Kosan Co., Ltd.), October 17, 1995 (17. 10. 95), Claim; par. Nos. (0007), (0018) to (0028); Tables 1, 2 (Family: none) | 1-4, 11, 12, 15, 19, 20, 23-25, 27 |
| X | JP, 4-99703, A (Idemitsu Kosan Co., Ltd.), March 31, 1992 (31. 03. 92), Claim; page 4, upper right column, line 14 to page 5, upper right column, line 11; Tables 1, 2 & EP, 471284, B1 & CA, 2048951, A & US, 5234893, A & DE, 69106812, A1 & ES, 2070379, T3 | 1-4, 15, 16, 24, 25 |
| X | JP, 4-95004, A (Idemitsu Kosan Co., Ltd.), March 27, 1992 (27. 03. 92), Claim; page 4, upper left column, line 14 to upper right column, line 9; Tables 1, 2 & EP, 471221, B1 & DE, 69109399, A1 & ES, 2074611, T3 | 1-4, 21, 22, 27 |
| X | JP, 4-89409, A (Idemitsu Kosan Co., Ltd.), March 23, 1992 (23. 03. 92), Claim; page 4, upper left column, line 14 to lower left column, line 10; Tables 1, 2 & EP, 469406, B1 & CA, 2048209, A & US, 5344810, A & DE, 69116460, A1 & ES, 2084735, T3 | 1-4, 9-12, 23 |
| A | JP, 3-261703, A (Hokko Chemical Industry Co., Ltd.), November 21, 1991 (21. 11. 91), Claim; Tables 1 to 3 (Family: none) | 1 - 27 |

Form PCT/ISA/210 (continuation of second sheet) (July 1992)